# EUROPEAN PATENT SPECIFICATION

(11) **EP 2 923 934 B1**
(45) Date of publication and mention of the grant of the patent: **05.10.2016**
(21) Application number: 13863895.2
(22) Date of filing: 20.12.2013
(51) Int. Cl.: B62K 5/027, B62K 5/05, B62K 5/08, B62K 5/10

(54) **VEHICLE**
FAHRZEUG
VÉHICULE

(30) Priority: 21.12.2012 JP 2012278878; 30.09.2013 JP 2013205459
(43) Date of publication of application: 30.09.2015
(73) Proprietor: Yamaha Hatsudoki Kabushiki Kaisha, Iwata-shi, Shizuoka 438-8501 (JP)
(72) Inventor: TAKANO Kazuhisa, Iwata-shi Shizuoka 438-8501 (JP); HIRAYAMA Yosuke, Iwata-shi Shizuoka 438-8501 (JP); IIZUKA Toshio, Iwata-shi Shizuoka 438-8501 (JP)
(74) Representative: Grünecker Patent- und Rechtsanwälte PartG mbB
(86) International application number: PCT/JP2013/084266
(87) International publication number: WO 2014/098223

(56) References cited:
- WO-A1-2005/058680
- WO-A1-2012/007819
- WO-A1-2012/007819
- WO-A2-2009/059099
- CN-Y- 201 151 444
- JP-A- 2002 337 779
- JP-A- 2002 337 779
- JP-A- 2010 228 551
- JP-A- 2011 195 099

## Description

The invention relates to a vehicle according to the preamble of independent claim 1. Such a vehicle can be taken from the prior art document WO 2012/007819 A1 (Patent Document 1).

It is known a vehicle which comprises a vehicle body frame that is leanable leftward or rightward when the vehicle is cornering, and two front wheels that are arranged side by side in a left-right direction of the vehicle body frame (for example, see Patent Documents 1 and Non-patent Document 1).

The vehicle comprising the leanable vehicle body frame and the two front wheels comprises a link mechanism. The link mechanism comprises an upper cross member and a lower cross member. In addition, the link mechanism comprises a right side rod which supports right end portions of the upper cross member and the lower cross member, and a left side rod which supports left end portions of the upper cross member and the lower cross member.

An intermediate portion of the upper cross member is connected to the body frame via an intermediate upper bearing and is turnable around an intermediate upper axis that extends in a front-rear direction of the body frame. A right end portion of the upper cross member is connected to the right side rod via a right upper bearing and is turnable around a right upper axis that extends in the front-rear direction of the body frame. A left end portion of the upper cross member is connected to the left side rod via a left upper bearing and is turnable around a left upper axis that extends in the front-rear direction of the body frame. An intermediate portion of the lower cross member is connected to the body frame via an intermediate lower bearing and is turnable around an intermediate lower axis that extends in the front-rear direction of the body frame. A right end portion of the lower cross member is connected to the right side rod via a right lower bearing and is turnable around a right lower axis that extends in the front-rear direction of the body frame. A left end portion of the lower cross member is connected to the left side rod via a left lower bearing and is turnable around a left lower axis that extends in the front-rear direction of the body frame.

When the body frame leans leftward or rightward from an upright state, the upper cross member and the lower cross member turn around the intermediate upper axis and the intermediate lower axis, respectively, relative to the body frame, so that relative positions of the two front wheels change in an up-down direction of the body frame. The upper cross member and the lower cross member are provided above the two front wheels in the up-down direction of the body frame when the body frame is in the upright state.

The vehicle comprising the leanable vehicle body frame and the two front wheels further comprises a right shock absorbing device which supports the right front wheel so as to be movable in the up-down direction of the vehicle body frame, and a left shock absorbing device which supports the left front wheel so as to be movable in the up-down direction of the vehicle body frame. The right shock absorbing device is supported by the right side rod so that the right shock absorbing device is turnable around a right axis that extends in the up-down direction of the body frame. The left shock absorbing device is supported by the left side rod so that the left shock absorbing device is turnable around a left axis that extends in the up-down direction of the body frame. The vehicle described in Patent Document 1 further comprises a handlebar, a steering shaft and a turn transmission mechanism. The handlebar is fixed to the steering shaft. The steering shaft is supported so that the steering shaft is turnable relative to the body frame. When the handlebar is turned, the steering shaft is also turned. The turn transmission mechanism transmits the turning of the steering shaft rightward shock absorbing device and the left shock absorbing device.

The vehicle comprising the leanable body frame and the two front wheels is provided with many on-board components which are provided on the periphery of the steering shaft. The on-board components include lamps such as a headlamp, a radiator, a reservoir tank, electric components such as a horn, a main switch of the vehicle, a stowage box, a stowage pocket and the like.
[Patent Document 1] International Publication No. 2012/007819
[Non-patent Document 1] Catalogo parti di ricambio, MP3300ieLT Mod. ZAPM64102, Piaggio & C. S.p.A.

Each of the vehicles described in Patent Document 1 and Non-patent Document 1 comprises the link mechanism that is provided on the periphery of the steering shaft which is disposed above the two front wheels. This link mechanism moves as the vehicle body frame leans. Accordingly, in the vehicle vehicle comprising the leanable body frame and the two front wheels, the on-board components need to be provided on the periphery of the steering shaft while avoiding the moving range of the link mechanism. This requirement tends to enlarge in size the structure on the periphery of the steering shaft in the vehicle comprising the leanable body frame and the two front wheels.

The vehicle described in Non-patent Document 1 comprises a lean restriction mechanism that restricts a range where the upper cross member and the lower cross member is turnable relative to the body frame. Specifically, projections are formed individually on a lower face of the upper cross member and an upper face of the lower cross member. Both the projections are disposed so as to approach each other when the upper cross member and the lower cross member turn relative to the body frame as the body frame leans leftward or rightward. When the projections are brought into contact with each other, the range where the upper cross member and the lower cross member are turnable relative to the body frame is restricted.

However, the dimensions of the upper cross member and the lower cross member in relation to the front-rear direction of the body frame need to be increased so that the projection provided on the lower face of the upper cross member is brought into contact with the projection provided on the upper face of the lower cross member. Additionally, a space between an upper face of the upper cross member and a lower face of the lower cross member needs to be determined so that the projection provided on the lower face of the upper cross member can be brought into contact with the projection provided on the upper face of the lower cross member. Consequently, limitations are imposed on the upper cross member and the lower cross member in relation to their shapes and positions. Accordingly, in the vehicle described in Non-patent Document 1 that comprises the lean restriction mechanism that restricts the range where the upper cross member and the lower cross member are turnable relative to the body frame, the structure on the periphery of the steering shaft that is disposed above the two front wheel is enlarged in size.

The prior art documents JP 2002-33779 A and CN 201151444 Y are disclosing a three wheel vehicle with a vehicle body frame including a head pipe, a right front wheel and a left front wheel arranged side by side in a left-right direction of the vehicle body frame. A link mechanism comprises a right side rod supporting the right front wheel and a left side rod supporting the left front wheel. An upper cross member having a right end portion turnably supporting an upper portion of the right side rod, a left end portion turnably supporting an upper portion of the left side rod, and a lower cross member having a right end portion turnably supporting a lower portion of the right side rod, a left end portion turnably supporting a lower portion of the left side rod are provided. A steering shaft is supported by the head pipe and a turn transmission mechanism is configured to transmit turning of the steering shaft in accordance with an operation of a handlebar. A lean restriction mechanism configured to restrict turnable ranges of the upper cross member and the lower cross member is provided between the lower cross member and the head pipe.

An object of the invention is to provide a vehicle as indicated above , that can ensure the degree of freedom in shaping and disposing an upper cross member and a lower cross member and that can restrict the enlargement in size of a structure on the periphery of a steering shaft that is disposed above the two front wheels,

**According to the present invention said object is solved by a vehicle having the features of independent claim 1. Preferred embodiments are laid down in the dependent claims.**

Accordingly there is provided a vehicle according to independent claim 1.

According to the above configuration, the lean restriction mechanism is provided at a position between one of the upper cross member and the lower cross member and a member on which the one of the upper cross member and the lower cross member is turnably supported. The position where the first contact portion and the second contact portion come in contact with each other lies in lateral sides of the right side rod, the left side rod, and the head pipe. The upper cross member and the lower cross member do not have to be brought into direct contact with each other, and therefore, the degree of freedom in shaping and positioning the upper cross member and the lower cross member is enhanced. Moreover, the position where the first contact portion and the second contact portion come in contact with each other lies in the lateral sides of the right side rod, the left side rod, and the head pipe, and therefore, the interference of the turnable ranges of the upper cross member and the lower cross member with the lean restriction mechanism is easily avoided. Consequently, even though the lean restriction mechanism that regulates the ranges where the upper cross member and the lower cross member are allowed to turn relative to the body frame is provided on the vehicle comprising the leanable body frame and the two front wheels, the degree of freedom in shaping and positioning the upper cross member and the lower cross member can be ensured, and the enlargement in size of the structure on the periphery of the steering shaft that is disposed above the two front wheels can be restricted.

The vehicle according to the invention may preferably be configured such that:
the one of the upper cross member and the lower cross member on which the first contact portion is provided comprises:
   a base portion supported by the right side rod, the left side rod, and the head pipe; and
   an extended portion arranged behind or ahead of the base portion and overlapping at least one of the right side rod, the left side rod, and the head pipe, when the vehicle body frame is viewed from the lateral sides thereof; and
the first contact portion is provided on the extended portion.

According to the above configuration, the first contact portion is provided on the extended portion which is arranged behind or ahead of the base portion and overlapping at least one of the right side rod, the left side rod, and the head pipe. The position where the first contact portion and the second contact portion come in contact with each other lies in the lateral sides thereof of the right side rod, the left side rod, and the head pipe. The base portions of the upper cross member and the lower cross member does not have to be brought into direct contact with each other, and therefore, the degree of freedom in shaping and positioning the base portions of the upper cross member and the lower cross member is enhanced. Moreover, the structure of the lean restriction mechanism can be made small, and therefore, the interference of the ranges where the base portions of the upper cross member and the lower cross member are allowed to turn with the lean restriction mechanism is easily avoided. Consequently, even though the lean restriction mechanism that regulates the ranges where the upper cross member and the lower cross member are allowed to turn relative to the body frame is provided on the vehicle comprising the leanable body frame and the two front wheels, the degree of freedom in shaping and positioning the upper cross member and the lower cross member can be ensured, and the enlargement in size of the structure on the periphery of the steering shaft that is disposed above the two front wheels can be restricted more easily.

The vehicle according to the invention may preferably be configured as described in dependent claim 3.

According to the above configuration, the position where the first contact portion and the second contact portion come in contact with each other overlap at least one of the right side rod, the left side rod, and the head pipe when the body frame is viewed from lateral sides thereof and overlap the base portion of the one of the cross members when the body frame is viewed from front thereof. The base portions of the upper cross member and the lower cross member do not have to be brought into direct contact with each other, and therefore, the degree of freedom in shaping and positioning the base portions of the upper cross member and the lower cross member is enhanced. Moreover, it is possible to restrict the ranges where the upper cross member and the lower cross member are allowed to turn from being enlarged. Consequently, even though the lean restriction mechanism that regulates the ranges where the upper cross member and the lower cross member are allowed to turn relative to the body frame is provided on the vehicle comprising the leanable body frame and the two front wheels, the degree of freedom in shaping and positioning the upper cross member and the lower cross member can be ensured, and the enlargement in size of the structure on the periphery of the steering shaft that is disposed above the two front wheels can be restricted more easily.

The vehicle according to the invention may preferably be configured as described in dependent claim 4.

According to the above configuration, the one of the upper cross member and the lower cross member is so configured such that the front base portion and the rear base portion which are arranged in the front-rear direction of the vehicle body frame are connected with the extended portion. The extended portion serves to enhance the rigidity of the one of the cross members. The lean restriction mechanism makes use of the portion having such a function. Accordingly, the structure of the lean restriction mechanism can be made small, and therefore, the interference of the ranges where the base portions of the upper cross member and the lower cross member are allowed to turn with the lean restriction mechanism is easily avoided. Consequently, even though the lean restriction mechanism that regulates the ranges where the upper cross member and the lower cross member are allowed to turn relative to the body frame is provided on the vehicle comprising the leanable body frame and the two front wheels, the degree of freedom in shaping and positioning the upper cross member and the lower cross member can be ensured, and the enlargement in size of the structure on the periphery of the steering shaft that is disposed above the two front wheels can be restricted more easily.

The vehicle according to the invention may preferably be configured as described in dependent claim 5.

According to the above configuration, the first contact portion and the second contact portion come in contact with each other at the position overlapping the front base portion and the rear base portion of the one of the upper cross member and the lower cross member when the vehicle body frame is viewed from front thereof. The base portions of the upper cross member and the lower cross member do not have to be brought into direct contact with each other, and therefore, the degree of freedom in shaping and positioning the base portions of the upper cross member and the lower cross member is enhanced. Moreover, it is possible to restrict the ranges where the upper cross member and the lower cross member are allowed to turn from being enlarged. Consequently, even though the lean restriction mechanism that regulates the ranges where the upper cross member and the lower cross member are allowed to turn relative to the body frame is provided on the vehicle comprising the leanable body frame and the two front wheels, the degree of freedom in shaping and positioning the upper cross member and the lower cross member can be ensured, and the enlargement in size of the structure on the periphery of the steering shaft that is disposed above the two front wheels can be restricted more easily.

The vehicle according to the invention may preferably be configured as described in dependent claim 6.

When the first front wheel or the second front wheel receives a load from a road surface under a condition that the first contact portion and the second contact portion come in contact with each other, the load is also transmitted to the first contact portion and the second contact portion. Moreover, in the vehicle comprising the leanable body frame and the two front wheels, when the vehicle turns by causing the body frame to lean leftwards, the load that the right front wheel bears becomes larger. Additionally, when the vehicle turns by causing the body frame to lean rightwards, a load that the left front wheel bears becomes larger. According to the above configuration, the load that the right front wheel bears is borne by the second right contact portion that is provided on the right side rod that lies near the right front wheel and the first right contact portion that is provided on the one of the upper cross member and the lower cross member. The load that the left front wheel bears is borne by the second left contact portion that is provided on the left side rod that lies near the left front wheel and the first left contact portion that is provided on the one of the upper cross member and the lower cross member. This can reduce the load that the other one of the upper cross member and the lower cross member bears. Consequently, even though the lean restriction mechanism that regulates the ranges where the upper cross member and the lower cross member are allowed to turn relative to the body frame is provided on the vehicle comprising the leanable body frame and the two front wheels, the degree of freedom in shaping and positioning the upper cross member and the lower cross member can be ensured, and the enlargement in size of the structure on the periphery of the steering shaft that is disposed above the two front wheels can be restricted more easily.

The vehicle according to the invention may preferably be configured such that:
the first contact portion is provided on the lower cross member.

When the first front wheel or the second front wheel receives a load from a road surface under a condition that the first contact portion and the second contact portion come in contact with each other, the load is also transmitted to the first contact portion and the second contact portion. According to the above configuration, the first contact portion is provided on the lower cross member that lies closer to the right front wheel and the left front wheel than the upper cross member, and therefore, it is possible to reduce the load that the upper cross member bears. Consequently, even though the lean restriction mechanism that regulates the ranges where the upper cross member and the lower cross member are allowed to turn relative to the body frame is provided on the vehicle comprising the leanable body frame and the two front wheels, the degree of freedom in shaping and positioning the upper cross member and the lower cross member can be ensured, and the enlargement in size of the structure on the periphery of the steering shaft that is disposed above the two front wheels can be restricted more easily.

The vehicle according to the invention may preferably be configured such that:
at least one of the first contact portion and the second contact portion includes a face extending parallel to the intermediate upper axis and the intermediate lower axis.

When the first front wheel or the second front wheel receives a load from a road surface under a condition that the first contact portion and the second contact portion come in contact with each other, the load is also transmitted to the first contact portion and the second contact portion. According to the above configuration, it is possible to reliably receive the load even by simple structure. Consequently, even though the lean restriction mechanism that regulates the ranges where the upper cross member and the lower cross member are allowed to turn relative to the body frame is provided on the vehicle comprising the leanable body frame and the two front wheels, the degree of freedom in shaping and positioning the upper cross member and the lower cross member can be ensured, and the enlargement in size of the structure on the periphery of the steering shaft that is disposed above the two front wheels can be restricted more easily.

The vehicle according to the invention may preferably be configured as described in dependent claim 9.

When the first front wheel or the second front wheel receives a load from a road surface under a condition that the first contact portion and the second contact portion come in contact with each other, the load is also transmitted to the first contact portion and the second contact portion. According to the above configuration, it is possible to reliably receive the load even by simple structure. Consequently, even though the lean restriction mechanism that regulates the ranges where the upper cross member and the lower cross member are allowed to turn relative to the body frame is provided on the vehicle comprising the leanable body frame and the two front wheels, the degree of freedom in shaping and positioning the upper cross member and the lower cross member can be ensured, and the enlargement in size of the structure on the periphery of the steering shaft that is disposed above the two front wheels can be restricted more easily.

### Brief Description of the Drawings

Fig. 1 is a left side view showing the whole of a vehicle according to a first embodiment of the invention.
Fig. 2 is a front view showing a front portion of the vehicle of Fig. 1.
Fig. 3 is a plan view showing the front portion of the vehicle of Fig. 1.
Fig. 4 is a plan view showing the front portion of the vehicle of Fig. 1 when the vehicle is steered.
Fig. 5 is a plan view showing the front portion of the vehicle of Fig. 1 when the vehicle is leaned.
Fig. 6 is a left side view showing the front portion of the vehicle of Fig. 1 when the vehicle is in an upright state.
Fig. 7 is a left side view showing the front portion of the vehicle of Fig. 1 when the vehicle is leaned.
Fig. 8 is a view showing a part of a second cross member comprised by the vehicle of Fig. 1.
Fig. 9 is a front view showing an operation of a lean restriction mechanism comprised by the vehicle of Fig. 1.
Fig. 10 is a left side view of the operation of the lean restriction mechanism of Fig. 9.
Fig. 11 is a view showing a working state of the lean restriction mechanism of Fig. 9 when the vehicle of Fig.1 is viewed from below.
Fig. 12 is a left side view showing the whole of a vehicle according to a second embodiment of the invention.
Fig. 13 is a front view showing a front portion of the vehicle of Fig. 12.
Fig. 14 is a right side section view showing a lean restriction mechanism comprised by the vehicle of Fig. 12.
Fig. 15 is a rear section view showing the lean restriction mechanism of Fig. 14.
Fig. 16 is a front view showing the front portion of the vehicle of Fig. 12 when the vehicle is leaned.

### Embodiments of the Invention

A three-wheeled vehicle, which is one example of a vehicle according to an embodiment of the invention, will be described below in detail with reference to the accompanying drawings. In the following description, it is exemplified a three-wheeled vehicle (hereinafter, referred to as a vehicle) comprising two front wheels and a single rear wheel.

In the accompanying drawings, components identical with or corresponding to each other will be designated by identical symbols and repetitive explanations will be omitted. An arrow F denotes a frontward direction of a vehicle. An arrow B denotes a rearward direction of the vehicle. An arrow U denotes an upward direction of the vehicle. An arrow D denotes a downward direction of the vehicle. An arrow R denotes a rightward direction of the vehicle. An arrow L denotes a leftward direction of the vehicle. When front, rear, left or right is referred to in the following description, it means front, rear, left or right viewed from a rider driving the vehicle. An up-down direction includes not only the vertical direction but also a substantial up-down direction which is a direction inclined from the vertical direction. A left-right direction includes not only the horizontal or immediately lateral direction but also a substantial left-right direction which is a direction inclined from the horizontal or immediately lateral direction. A center in a vehicle width direction means a center position of a width direction of the vehicle. Lateral sides in the vehicle width direction means a direction toward left or right from the center in the vehicle width direction. An unloaded state of the vehicle means an upright state of the vehicle that the front wheels are not turned or leaned under a no-rider and no-fuel condition.

### (First Embodiment)

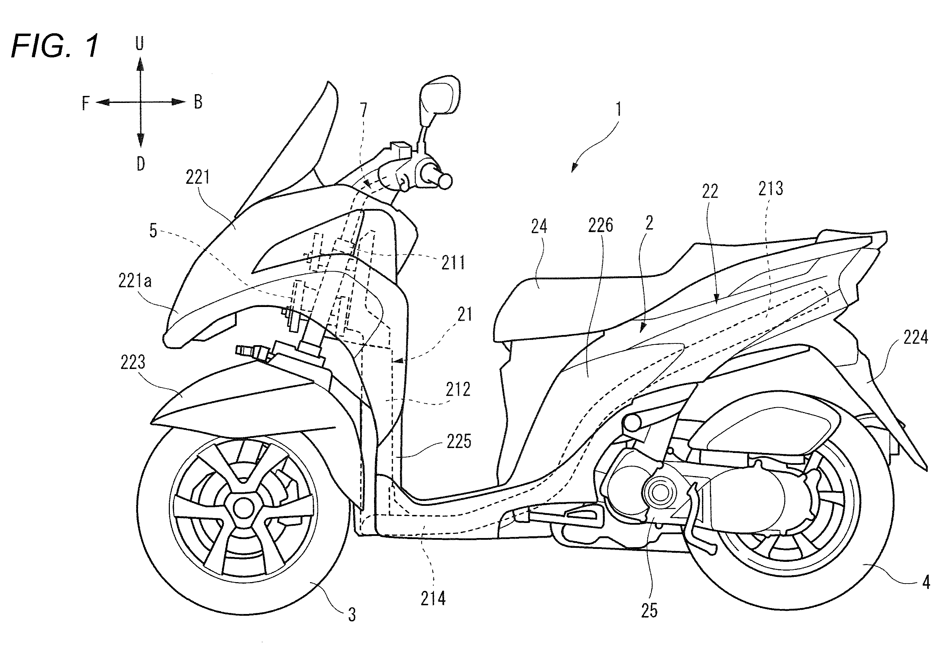

Referring to Figs. 1 to 11, a vehicle 1 according to a first embodiment of the invention will be described.

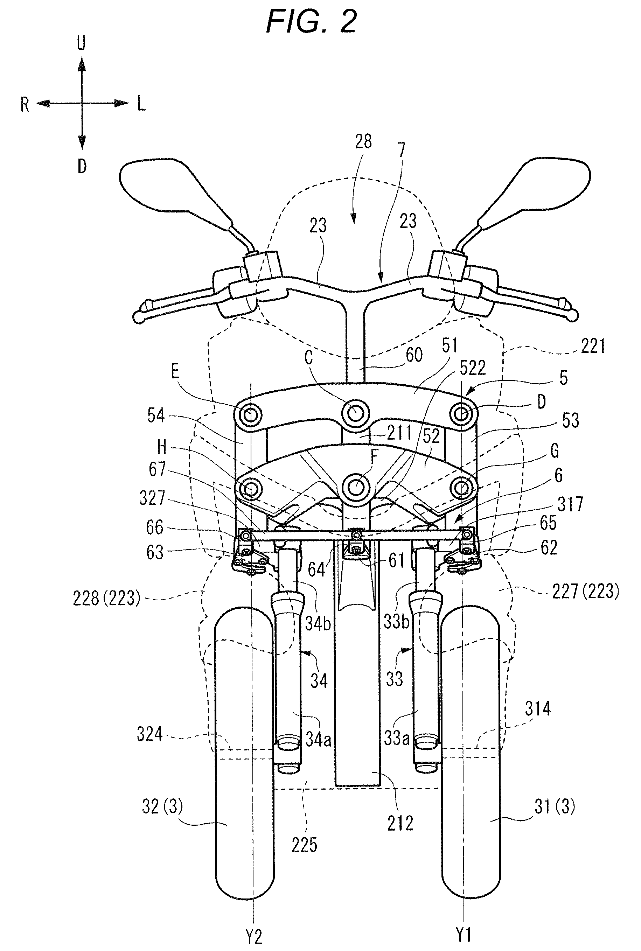

Fig. 1 is a left side view showing the whole of the vehicle 1. The vehicle 1 comprises a vehicle main body portion 2, a pair of left and right front wheels 3 (see Fig. 2), a rear wheel 4, a steering mechanism 7, and a link mechanism 5. The vehicle main body portion 2 comprises a body frame 21, a body cover 22, a seat 24 and a power unit 25.

The body frame 21 includes a head pipe 211, a down frame 212, an under frame 214 and a rear frame 213. In Fig. 1, in the body frame 21, portions that are hidden by the body cover 22 are indicated by dashed lines. The body frame 21 supports the power unit 25, the seat 24 and the like. The power unit 25 includes a drive source such as an engine, an electric motor or the like, a transmission and the like.

The head pipe 211 is disposed at a front portion of the vehicle 1. In a side view of the vehicle, the head pipe 211 is slightly inclined relative to a vertical direction so that an upper portion is positioned directly behind a lower portion thereof. The steering mechanism 7 and the link mechanism 5 are disposed on the periphery of the head pipe 211. A steering shaft 60 of the steering mechanism 7 is turnably inserted into the head pipe 211. The head pipe 211 supports the link mechanism 5.

The down frame 212 is connected to the head pipe 211. The down frame 212 is disposed behind the head pipe 211 and extends along an up-down direction. The under frame 214 is connected to a lower portion of the down frame 212. The under frame 214 extends rearwards from the lower portion of the down frame 212. The rear frame 213 is disposed behind the under frame 214 and extends rearwards and upwards. The rear frame 213 supports the seat 24, the power unit 25, a tail lamp and the like.

The body frame 21 is covered by the body cover 22. The body cover 22 comprises a front cover 221, a pair of left and right front fenders 223, a leg shield 225, a center cover 226 and a rear fender 224.

The front cover 221 is arranged directly ahead of the seat 24. The front cover 221 covers the steering mechanism 7 and the link mechanism 5 at least partially. The front cover 221 includes a front portion 221a that is disposed ahead of the link mechanism 5. In a side view of the vehicle 1 in an unloaded state, the front portion 221a of the front cover 221 is provided above the front wheels 3. In the side view of the vehicle 1 in the unloaded state, the front portion 221 a of the front cover 221 is disposed behind front ends of the front wheels 3. The leg shield 225 is disposed directly below the front cover 221 and directly ahead of the seat 24. The center cover 226 is disposed so as to cover the circumference of the rear frame 213.

The pair of left and right front fenders 223 (see Fig. 2) are disposed directly below the front cover 221 and directly above the pair of front wheels 3. The rear fender 224 is disposed directly above a rear portion of the rear wheel 4.

The pair of left and right front wheels 3 are disposed directly below the head pipe 211 and directly below the front cover 221 when the vehicle 1 is the unloaded state. The rear wheel 4 is disposed directly below the center cover 226 and the rear fender 224.

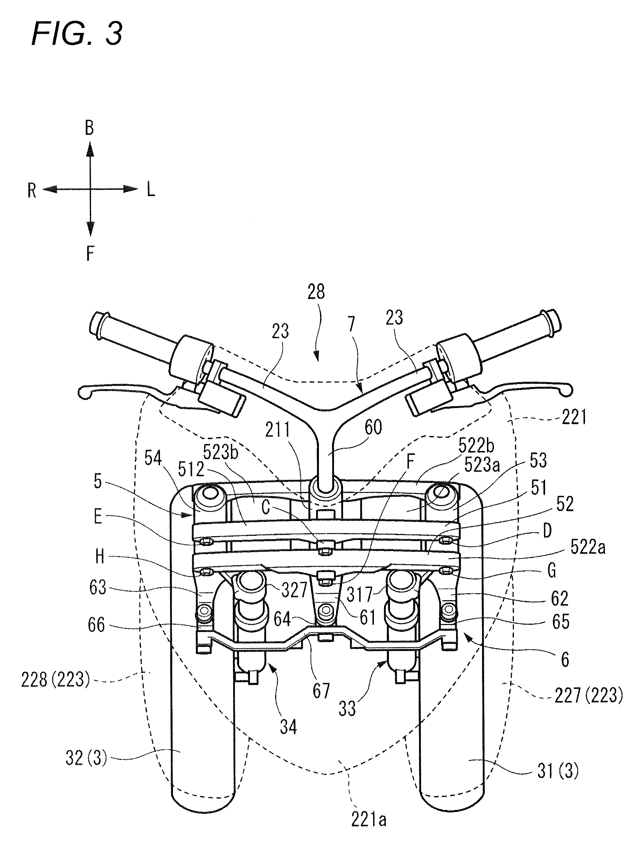

Fig. 2 is a front view of the vehicle 1 when the vehicle 1 of Fig. 1 is viewed from front thereof of a front portion of the vehicle 1. Fig. 3 is a plan view of the vehicle 1 when the vehicle 1 of Fig. 1 is viewed from above. In Figs. 2 and 3, the vehicle 1 is depicted as seen through the body cover 22.

As shown in Figs. 2 and 3, the steering mechanism 7 comprises a steering force transmission mechanism 6, a first shock absorber 33, a second shock absorber 34 and the pair of left and right front wheels 3.

The pair of left and right front wheels 3 includes a first front wheel 31 and a second front wheel 32 that are arranged side by side in the left-right direction of the vehicle body frame 21. The first front wheel 31, which is an example of a left front wheel, is disposed on the left of the center in the vehicle width direction. The second front wheel 32, which is an example of a right front wheel, is disposed on the right of the center in the width direction of the vehicle 1. The first front wheel 31 and the second front wheel 32 are symmetrically disposed with respect to the center in the width direction of the vehicle 1. In this description, the "left-right direction of the vehicle body frame 21" denotes a direction that intersects vertically an axial direction of the head pipe 211 when the vehicle 1 is viewed from front thereof.

A first front fender 227, which is one of the pair of front fenders 223, is disposed directly above the first front wheel 31. A second front fender 228, which is the other of the pair of front fenders 223, is disposed directly above the second front wheel 32. The first front wheel 31 is supported by the first shock absorber 33. The second front wheel 32 is supported by the second shock absorber 34.

The first shock absorber 33, which is an example of a left shock absorbing device, supports the first front wheel 31 at a lower portion thereof and buffers an upward displacement of the first front wheel 31 in the up-down direction of the body frame 21. In this specification, the "up-down direction of the body frame 21" denotes a direction along the direction of an axis of the head pipe 211 when the vehicle 1 is viewed from front thereof.

Specifically, the first shock absorber 33 includes a first lower portion 33a and a first upper portion 33b. The first front wheel 31 is supported by the first lower portion 33a. The first lower portion 33a extends in the up-down direction and supports a first wheel spindle 314 at a lower end thereof. The first wheel spindle 314 supports the first front wheel 31. The first upper portion 33b is disposed directly above the first lower portion 33a and partially inserted into the first lower portion 33a. The first upper portion 33b can move relatively to the first lower portion 33a in a direction in which the first lower portion 33a extends. An upper portion of the first upper portion 33b is fixed to a first bracket 317.

The first shock absorber 33 is a so-called telescopic shock absorber. The first lower portion 33a and the first upper portion 33b make up two telescopic elements that are arranged in the front-rear direction to be connected together. Being so configured, the relative rotation of the first upper portion 33b to the first lower portion 33a is restricted.

The second shock absorber 34, which is an example of a right shock absorbing device, supports the second front wheel 32 at a lower portion thereof and buffers an upward displacement of the second front wheel 32 in the up-down direction of the body frame 21. Specifically, the second shock absorber 34 includes a second lower portion 34a and a second upper portion 34b. The second front wheel 32 is supported by the second lower portion 34a. The second lower portion 34a extends in the up-down direction and supports a second wheel spindle 324 at a lower end thereof. The second wheel spindle 324 supports the second front wheel 32. The second upper portion 34b is disposed directly above the second lower portion 34a and partially inserted into the second lower portion 34a. The second upper portion 34b can move relatively to the second lower portion 34a in a direction in which the second lower portion 34a extends. An upper portion of the second upper portion 34b is fixed to a second bracket 327.

The second shock absorber 34 is a so-called telescopic shock absorber. The second lower portion 34a and the second upper portion 34b make up two telescopic elements that are arranged in the front-rear direction to be connected together. Being so configured, the relative turning of the second upper portion 34b to the second lower portion 34a is restricted.

The steering force transmission mechanism 6, which is an example of a turn transmission mechanism, transmits a turn of the steering shaft 60 according to an operation of the handlebar 23 to the first shock absorber 33 and the second shock absorber 34 to turn the first shock absorber 33 and the second shock absorber 34 about a first center axis Y1 and a second center axis Y2, respectively.

The steering force transmission mechanism 6 is disposed above the first front wheel 31 and the second front wheel 32. The steering force transmission mechanism 6 comprises a steering member 28 as a member that inputs steering force exerted by a rider. The steering member 28 includes the steering shaft 60 and the handlebar 23 that is connected to an upper portion of the steering shaft 60. The steering shaft 60 extends substantially in the up-down direction and partially inserted into the head pipe 211 so that the steering shaft 60 is turnable relative to the head pipe 211. The steering shaft 60 is turned as a rider operates the handlebar 23.

The steering force transmission mechanism 6 includes, in addition to the steering member 28, a first transmission plate 61, a second transmission plate 62, a third transmission plate 63, a first joint 64, a second joint 65, a third joint 66, a tie rod 67, the first bracket 317 and the second bracket 327. The steering force transmission mechanism 6 transmits steering force generated when a rider operates the handlebar 23 to the first bracket 317 and the second bracket 327 via the constituent members.

The first transmission plate 61 is disposed at the center in the width direction of the vehicle 1 and is connected to the steering shaft 60. The first transmission plate 61 is not turnable relative to the steering shaft 60. The first transmission plate 61 is turned as the steering shaft 60 turns.

The second transmission plate 62 is connected to a first side member 53 of the link mechanism 5, which will be described later. The second transmission plate 62 is not turnable relative to the first side member 53. The second transmission plate 62 is fixed to the first bracket 317. The second transmission plate 62 is disposed directly below the first bracket 317. The second transmission plate 62 is disposed directly on the right of the first transmission plate 61.

The third transmission plate 63 is connected to a second side member 54 of the link mechanism 5, which will be described later. The third transmission plate 63 is not turnable relative to the second side member 54. The third transmission plate 63 is disposed symmetrically with the second transmission plate 62 with respect to the first transmission plate 61. The third transmission plate 63 is fixed to the second bracket 327. The third transmission plate 63 is disposed directly below the second bracket 327.

The first joint 64 is disposed at a front portion of the first transmission plate 61. The first joint 64 is supported by a turning shaft that extends substantially in the up-down direction so that the first joint 64 is turnable relative to the first transmission plate 61. The second joint 65 is disposed at a front portion of the second transmission plate 62. The second joint 65 is supported by a turning shaft that extends substantially in the up-down direction so that the second joint 65 is turnable relative to the second transmission plate 62. The third joint 66 is disposed at a front portion of the third transmission plate 63. The third joint 66 is supported by a turning shaft that extends substantially in the up-down direction so that the third joint 66 is turnable relative to the third transmission plate 63. The first joint 64, the second joint 65, and the third joint 66 each have a shaft portion that extends in the front-rear diction at a front portion thereof.

The tie rod 67 extends in the width direction of the vehicle 1. The tie rod 67 is supported at the front portion of the first joint 64, the front portion of the second joint 65 and the front portion of the third joint 66 so that they are turnable relative to their shaft portions that extend in the front-rear direction.

The steering force transmission mechanism 6 that is configured in the way described the above transmits the steering force transmitted from the steering member 28 to the tie rod 67 via the first transmission plate 61 and the first joint 64. This causes the tie rod 67 to be displaced in either leftwards or rightwards. The steering force transmitted to the tie rod 67 is transmitted from the tie rod 67 to the first bracket 317 via the second transmission plate 62 and the second joint 65 and is transmitted from the tie rod 67 to the second bracket 327 via the third transmission plate 63 and the third joint 66. This causes the first bracket 317 and the second bracket 327 to turn in the direction in which the tie rod 67 is displaced.

In this embodiment, the link mechanism 5 adopts a four-joint parallel link system (also, called a parallelogram link).

The link mechanism 5 is disposed below the handlebar 23. The link mechanism 5 is connected to the head pipe 211 of the body frame 21. The link mechanism 5 comprises a first cross member 51 (an example of an upper cross member), a second cross member 52 (an example of a lower cross member), a first side member 53 (an example of a left side rod), and a second side member 54 (an example of a right side rod) that make up a configuration enabling the vehicle 1 to lean as required.

Additionally, the link mechanism 5 comprises the first bracket 317 and the first shock absorber 33 that are connected to a lower portion of the first side member 53 to make up a configuration that leans together with the first side member 53. Further, the link mechanism 5 comprises the second bracket 327 and the second shock absorber 34 that are connected to a lower portion of the second side member 54 to make up a configuration that leans together with the second side member 54.

The first cross member 51 extends in the left-right direction of the body frame 21. An intermediate portion of the first cross member 51 is connected to the body frame 21 (the head pipe 211) by a connecting portion C. The intermediate portion of the first cross member 51 is supported on the body frame 21 at the connecting portion C so that the intermediate portion is turnable about a turning axis (an example of an intermediate upper axis) which extends in the front-rear direction of the body frame 21. Even in the event that the steering shaft 60 turns as the handlebar 23 turns, the first cross member 51 does not turn about the turning axis of the steering shaft 60.

In this specification, when a certain constituent element is described as "extending in the left-right direction of the body frame 21," this includes a case where the constituent element extends while being inclined relative to the left-right direction of the body frame 21, and means that the constituent element extends while being inclined to be closer to the left-right direction than to the up-down and front-rear directions of the body frame. When referred to in this specification, the "front-rear direction of the body frame 21" means a direction that coincides with the front-rear direction of the vehicle 1. In this specification, when a certain constituent element is described as "extending in the front-rear of the body frame 21," this includes a case where the constituent element extends while being inclined relative to the front-rear of the body frame 21 and means that the constituent element extends while being inclined to be closer to the front-rear direction than to the up-down and left-right directions of the body frame.

A left end portion of the first cross member 51 is connected to an upper portion of the first side member 53 by a connecting portion D. The upper portion of the first side member 53 is supported by the left end portion of the first cross member 51 at the connecting portion D so that the upper portion is turnable about a turning axis that extends in the front-rear direction of the body frame 21. A right end portion of the first cross member 51 is connected to an upper portion of the second side member 54 by a connecting portion E. The upper portion of the second side member 54 is supported by the right end portion of the first cross member 51 at the connecting portion E so that the upper portion is turnable about a turning axis that extends in the front-rear direction of the body frame 21.

The second cross member 52 extends in the left-right direction of the body frame 21. An intermediate portion of the second cross member 52 is connected to the body frame 21 (the head pipe 211) by a connecting portion F. The intermediate portion of the second cross member 52 is supported on the body frame 21 at the connecting portion F so that the intermediate portion is turnable about a turning axis (an example of an intermediate lower axis) which extends in the front-rear direction of the body frame 21. The turning axis that extends in the front-rear direction of the body frame 21 at the connecting portion F is parallel to the turning axis that extends in the front-rear direction of the body frame 21 at the connecting portion C. Even though the steering shaft 60 turns as the handlebar 23 turns, the second cross member 52 does not turn around the turning axis of the steering shaft 60.

A left end portion of the second cross member 52 is connected to a lower portion of the first side member 53 at a connecting portion G. The lower portion of the first side member 53 is supported by the left end portion of the second cross member 52 at the connecting portion G so that the lower portion is turnable about a turning axis that extends in the front-rear direction of the body frame 21. A right end portion of the second cross member 52 is connected to the second side member 54 by a connecting portion H. The lower portion of the second side member 54 is supported by the right end portion of the second cross member 52 at the connecting portion H so that the lower portion is turnable about a turning axis that extends in the front-rear direction of the body frame 21.

The first side member 53 is disposed directly on the right of the head pipe 211 and extends parallel to a direction in which the head pipe 211 extends. The first side member 53 is disposed above the first front wheel 31 and the first shock absorber 33. The first side member 53 comprises a turnable member (not shown) in an interior thereof. The turnable member is turnable about the first center axis Y1. A lower portion of the turnable member is connected to the first bracket 317. Consequently, the first bracket 317 is supported by the first side member 53 so that it is turnable about the first center axis Y1 (an example of a left axis).

The second side member 54 is disposed directly on the right of the head pipe 211 and extends parallel to the direction in which the head pipe 211 extends. The second side member 54 is disposed above the second front wheel 32 and the second shock absorber 34. The second side member 54 comprises a turnable member (not shown) in an interior thereof. The turnable member is turnable about the second center axis Y2. A lower portion of the turnable member is connected to the second bracket 327. Consequently, the second bracket 327 is supported by the second side member 54 so that it is turnable about the second center axis Y2 (an example of a right axis).

In summary, the first cross member 51, the second cross member 52, the first side member 53 and the second side member 54 are connected so that the first cross member 51 and the second cross member 52 are maintained in a parallel posture relative to each other and that the first side member 53 and the second side member 54 are maintained in a parallel posture relative to each other.

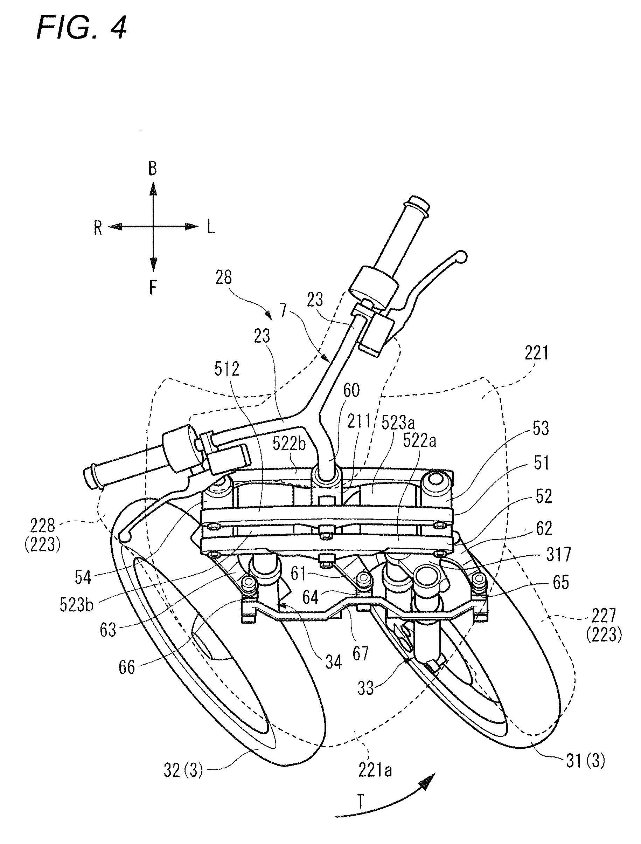

Fig. 4 is a plan view of the front portion of the vehicle 1 when the vehicle 1 is steered to be turned, depicting how the vehicle 1 is steered to be turned. The front portion of the vehicle 1 is depicted as seen through the body cover 22.

As shown in Fig. 4, when the handlebar 23 is turned leftwards or rightwards, the steering force transmission mechanism 6 of the steering mechanism 7 works so as to perform a steering operation. When the steering shaft 60 is turned as a result of the handlebar 23 being turned, the first transmission plate 61 is turned in association with the turning of the steering shaft 60.

For example, when the steering shaft 60 is turned in a direction indicated by an arrow T in Fig. 4, the tie rod 67 is moved leftwards and rearwards in association with the turning of the first transmission plate 61. As this occurs, the first transmission plate 61 is allowed to turn relative to the first joint 64 by the turning shaft of the first joint 64 that extends substantially in the up-down direction, and the tie rod 67 moves leftwards and rearwards while maintaining its posture. As the tie rod 67 moves leftwards and rearwards, the second transmission plate 62 and the third transmission plate 63 turn in the direction of the arrow T about the first side member 53 and the second side member 54, respectively. As this occurs, the second transmission plate 62 turns relative to the second joint 65 about the turning shaft of the second joint 65 that extends substantially in the up-down direction. The third transmission plate 63 turns relative to the third joint 66 about the turning shaft of the third joint 66 that extends substantially in the up-down direction.

When the second transmission plate 62 and the third transmission plate 63 are turned in the direction of the arrow T, the first bracket 317 and the second bracket 327 are turned in the direction of the arrow T. When the first bracket 317 and the second bracket 327 are turned in the direction of the arrow T, the first front wheel 31 is turned about the first center axis Y1 (see Fig. 2) via the first shock absorber 33, and the second front wheel 32 is turned about the second center axis Y2 (see Fig. 2) via the second shock absorber 34.

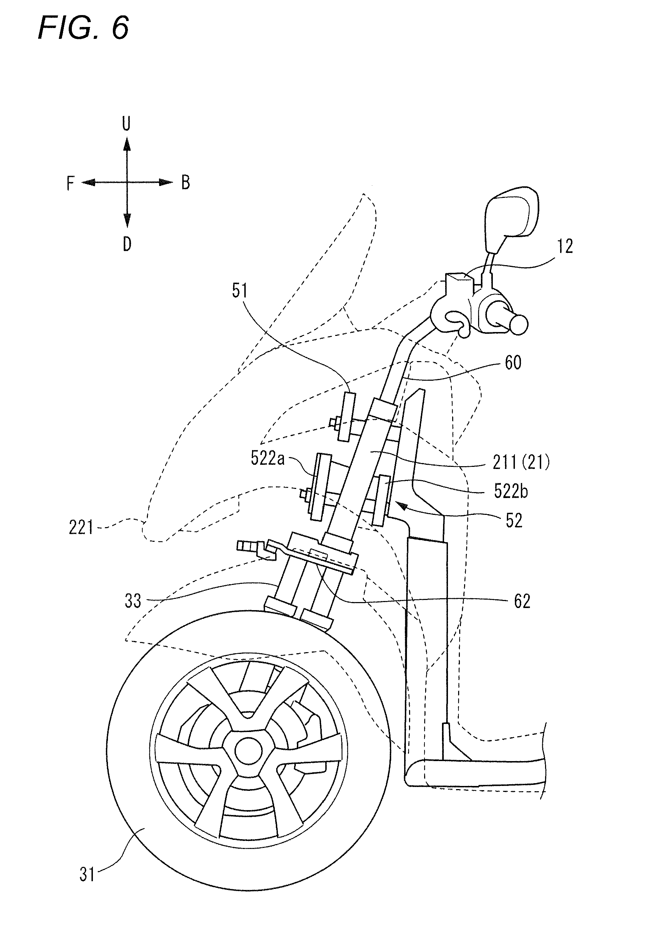

Fig. 6 is a side view of the front portion of the vehicle 1 that stays in the upright state when the vehicle 1 is viewed from left. The front portion of the vehicle 1 is depicted as seen through the body cover 22.

The second cross member 52 comprises a front plate-shaped member 522a and a rear plate-shaped member 522b. The front plate-shaped member 522a and the rear plate-shaped member 522b hold the head pipe 211 therebetween in the front-rear direction of the body frame 21. When the body frame 21 is resting in the upright state, the front plate-shaped member 522a and the rear plate-shaped member 522b are disposed below the first cross member 51 and above the first shock absorber 33 and the second shock absorber 34.

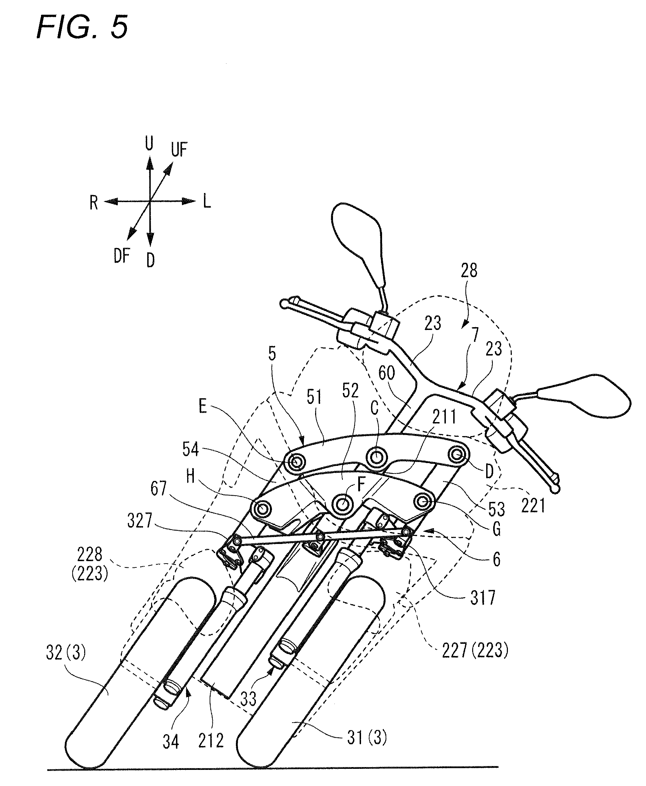

Fig. 5 is a front view of the front portion of the vehicle 1 with the vehicle 1 caused to lean, depicting how the vehicle 1 leans. When the vehicle 1 is in the upright state, an upward direction UF of the vehicle body frame 21 coincides with a vertically upward direction U. When the vehicle 1 is in a leaning state, the upward direction UF of the vehicle body frame 21 does not coincide with the vertically upward direction U. This is true with a relationship between a vertically downward direction D and a downward direction DF of the body frame 21.

As shown in Fig. 5, the vehicle 1 leans leftwards or rightwards as the link mechanism 5 works. The working of the link mechanism 5 means that each of the constituent members in the link mechanism 5 (the first cross member 51, the second cross member 52, the first side member 53 and the second side member 54) that serve to perform a leaning operation respectively turn relative to each other about their connecting points as the turning axes so that the link mechanism 5 is transformed.

In the link mechanism 5 of this embodiment, for example, when the vehicle 1 is in the upright state, the first cross member 51, the second cross member 52, the first side member 53 and the second side member 54 that make up the link mechanism 5 forms substantially a rectangular shape. However, when the vehicle 1 is caused to lean, the substantial rectangular shape is changed into a parallelogram-like shape. The link mechanism 5 performs a leaning operation in association as the first cross member 51, the second cross member 52, the first side member 53 and the second side member 54 turn relative to each other, whereby the first front wheel 31 and the second front wheel 32 are caused to lean individually.

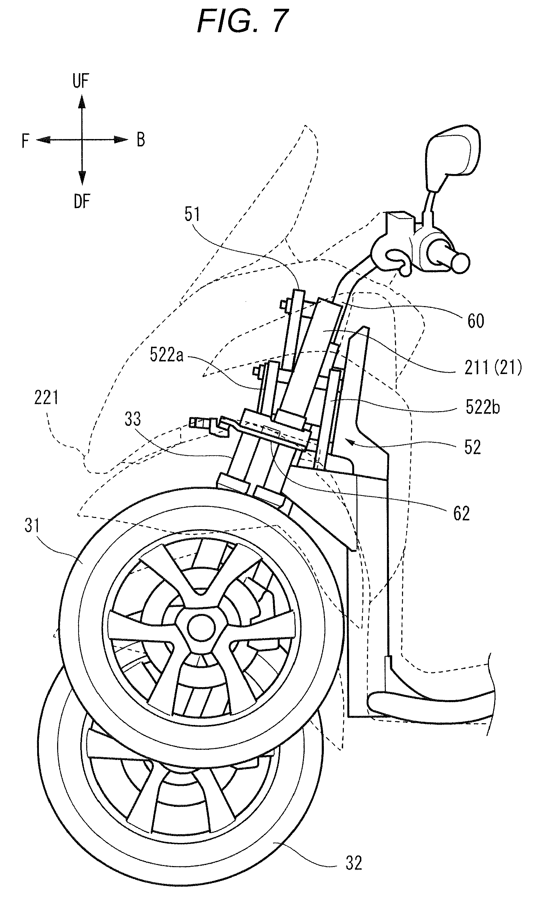

For example, when a rider causes the vehicle 1 to lean leftwards, the head pipe 211 is leaned leftwards relative to the vertical direction. When the head pipe 211 is leaned, the first cross member 51 turns relative to the head pipe 211 about the connecting portion C, and the second cross member 52 turns relative to the head pipe 211 about the connecting portion F. As a result, the first cross member 51 moves further leftwards than the second cross member 52, and the first side member 53 and the second side member 54 lean relative to the vertical direction while being kept in parallel to the head pipe 211. As this occurs, the first side member 53 and the second side member 54 are turned relative to the first cross member 51 and the second cross member 52. As the link mechanism 5 transforms as described the above, the first front wheel 31 is displaced upwards relative to the body frame 21 (in the direction UF) than the second front wheel 32. Fig. 7 is a side view of the front portion of the vehicle 1 that is leaning leftwards when the vehicle 1 is viewed from a left side of the body frame 21.

On the contrary, when the rider causes the vehicle 1 to lean rightwards, the head pipe 211 is leaned rightwards relative to the vertical direction. When the head pipe 211 is leaned, the first cross member 51 is turned relative to the head pipe 211 about the connecting portion C, and the second cross member 52 is turned relative to the head pipe 211 about the connecting portion F. As a result, the first cross member 51 moves further rightwards than the second cross member 52, and the first side member 53 and the second side member 54 lean relative to the vertical direction while being kept in parallel to the head pipe 211. As this occurs, the first side member 53 and the second side member 54 are turned relative to the first cross member 51 and the second cross member 52. As the link mechanism 5 transforms as described the above, the second front wheel 32 is displaced upwards relative to the body frame 21 (in the direction UF) than the first front wheel 31.

While the vehicle 1 is leaning, the tie rod 67 turns relative to the shaft portions, extending in the front-rear direction, of the first joint 64, the second joint 65 and the third joint 66. This allows the tie rod 67 to maintain its parallel posture to the first cross member 51 and the second cross member 52, even though the vehicle 1 leans.

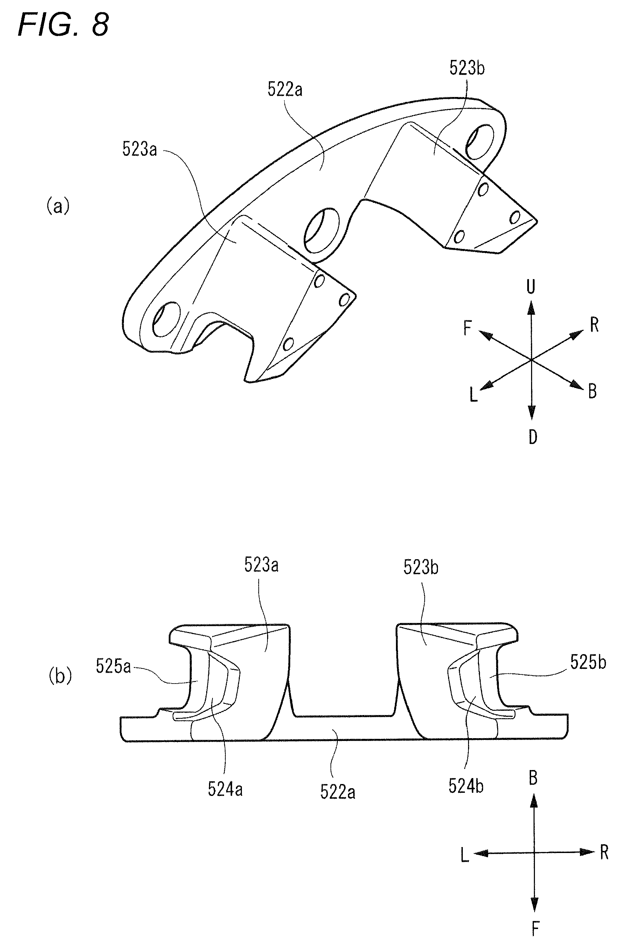

Fig. 8 is an enlarged view of a partial configuration of the second cross member 52. As shown in (a) in Fig. 8, the front plate-shaped member 522a of the second cross member 52 is formed integrally with a left connecting block 523a and a right connecting block 523b. In the front plate-shaped member 522a, a through hole that makes up part of the connecting portion F is formed between the left connecting block 523a and the right connecting block 523b. A through hole that makes up part of the connecting portion G is formed directly on the left of the left connecting block 523a. A through hole that makes up part of the connecting portion H is formed directly on the right of the right connecting block 523b. The rear plate-shaped member 522b is fixed to respective distal end faces of the left connecting block 523a and the left connecting block 523b by appropriate fastening members.

As shown in (b) in Fig. 8, a left recess portion 524a is formed at a lower portion of the left connecting block 523a, and a width in the front-rear direction of the left recess portion 524a becomes narrower as it extends upwards. Similarly, a right recess portion 524b is formed at a lower portion of the right connecting block 523b, and a width in the front-rear direction of the right recess portion 524b becomes narrower as it extends upwards.

A left contact face 525a is formed at the lower portion of the left connecting block 523a. The left contact face 525a is so formed as to continue to the left recess portion 524a. When the body frame 21 is resting in the upright state, the left contact face 525a is directed leftwards. A right contact face 525b is formed at the lower portion of the right connecting block 523b. The right contact face 525b is so formed as to continue to the right recess portion 524b. When the body frame 21 is resting in the upright state, the right contact face 525b is directed rightwards.

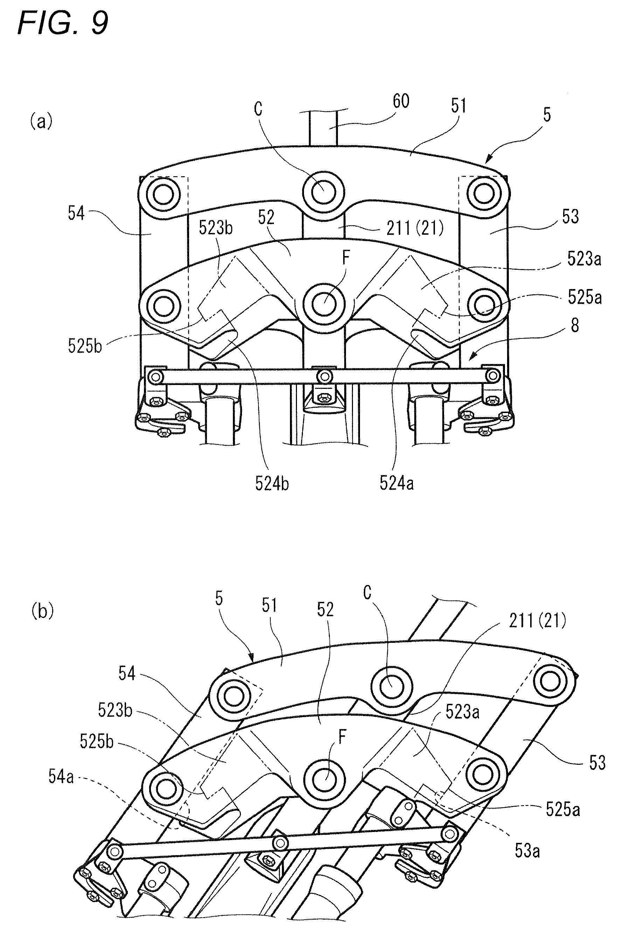

(a) in Fig. 9 is an enlarged front view of the link mechanism 5 when the body frame 21 rests in the upright state. The left contact face 525a that is formed in the left connecting block 523a faces the first side member 53 with a certain space defined therebetween. The right contact face 525b that is formed in the right connecting block 523b faces the second side member 54 with a certain space defined therebetween. The left contact face 525a and the right contact face 525b are faces that extend parallel to the turning axis that extends in the front-rear direction of the body frame 21 at the connecting portion F.
(b) in Fig. 9 is an enlarged front view of the link mechanism 5 when the body frame 21 leans leftwards. As the head pipe 211 leans leftwards, the left contact face 525a that is formed on the left connecting block 523a approaches the first side member 53. When the head pipe 211 leans further leftwards, the left contact face 525a comes into contact with the first side member 53. A portion on the first side member 53 with which the left contact face 525a comes into contact is shown as a left contact portion 53a.

This restricts a range where the second cross member 52 is allowed to turn leftwards about the connecting portion F relative to the head pipe 211. The second cross member 52 is connected to the first cross member 51 via the first side member 53 and the second side member 54. Therefore, the restriction of the turnable range of the second cross member 52 restricts, in turn, a range where the first cross member 51 is allowed to turn leftwards about the connecting portion C relative to the head pipe 211.

Although the illustration is omitted, as the head pipe 211 leans rightwards, the right contact face 525b that is formed on the right connecting block 523b approaches the second side member 54. When the head pipe 211 leans further rightwards, the right contact face 525b comes into contact with the second side member 54. At (b) in Fig. 9, a portion on the second side member 54 with which the right contact face 525b comes into contact is shown as a right contact portion 54a. As this occurs, the left connecting block 523a faces the first side member 53 with a certain space defined therebetween.

The contact of the right contact face 525b with the second side member 54 restricts a range where the second cross member 52 is allowed to turn rightwards about the connecting portion F relative to the head pipe 211. The second cross member 52 is connected to the first cross member 51 via the first side member 53 and the second side member 54. Therefore, the restriction of the turnable range of the second cross member 52 restricts, in turn, a range where the first cross member 51 is allowed to turn rightwards about the connecting portion C relative to the head pipe 211.

Namely, the left contact face 525a provided on the second cross member 52 and the left contact portion 53a provided on the first side member 53, and the right contact face 525b provided on the second cross member 52 and the right contact portion 54a provided on the second side member 54 make up a lean restriction mechanism 8. The lean restriction mechanism 8 restricts the ranges where the first cross member 51 and the second cross member 52 are allowed to turn relative to the head pipe 211. This restricts ranges where the body frame 21 is allowed to lean leftwards and right from its upright state.

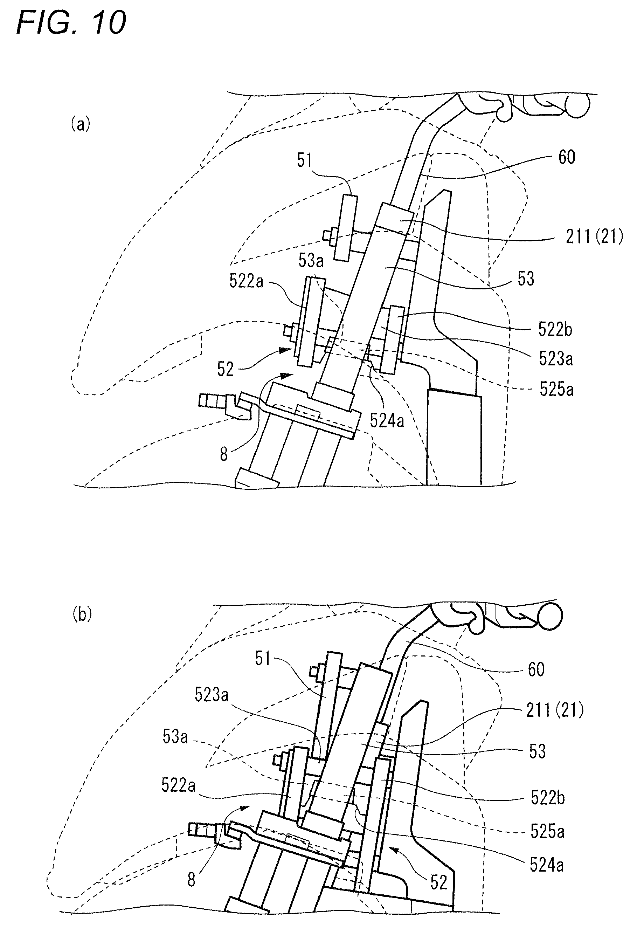

(a) in Fig. 10 is an enlarged left side view of the lean restriction mechanism 8 under a condition that the body frame 21 rests in the upright state. (b) in Fig. 10 is an enlarged left side view of the lean restriction mechanism 8 under a condition that the body frame leans leftwards. The state shown in (a) in Fig. 10 corresponds to the state shown in (a) in Fig. 9. The state shown in (b) in Fig. 10 corresponds to the state shown in (b) in Fig. 9.

Namely, as shown in (b) in Fig. 10, the left contact face 525a provided on the second cross member 52 is in contact with the left contact portion 53a provided on the first side member 53 in a position that overlaps the first side member 53 when the body frame 21 is viewed from a lateral side.

Although the illustration is omitted, similarly, the right contact face 525b provided on the second cross member 52 is in contact with the right contact portion 54a provided on the second side member 54 in a position that overlaps the second side member 54 when the body frame 21 is viewed from a lateral side.

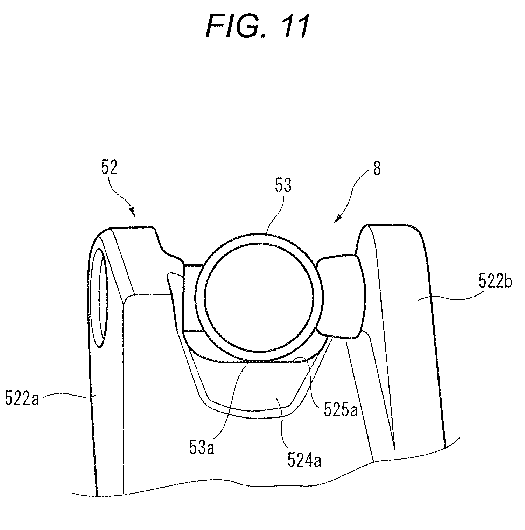

Fig. 11 is a view showing part of the second cross member 52 and the first side member 53 as viewed from below when they are in the state shown in (b) in Fig. 9 and in (b) in Fig. 10. The left contact face 525a includes a flat face. Although the illustration is omitted, similarly, the right contact face 525b also includes a flat face. The left contact portion 53a comprises a projecting portion that projects towards the left contact face 525a. Although the illustration is omitted, similarly, the right contact face 54a also comprises a projecting portion that projects towards the right contact face 525b. Each of the first side member 53 and the second side member 54 exhibits a cylindrical shape. Accordingly, the left contact portion 53a comprises the projecting portion that projects towards the left contact face 525a without being subjected to specific working. Similarly, the right contact portion 54a also comprises the projecting portion that projects towards the right contact face 525b without being subjected to specific working. On the other hand, the left contact face 525a and the right contact face 525b that are formed on the second cross member 52 may be such faces that can contact the projecting portions. Accordingly, the left contact face 525a and the right contact face 525b can simply be configured without being subjected to specific working. These contact faces do not have to be the flat faces and hence may be curved faces.

As described with reference to Figs. 8 to 11, the vehicle 1 according to this embodiment comprises the lean restriction mechanism 8 that restricts the ranges where the first cross member 51 and the second cross member 52 are allowed to turn relative to the body frame 21. The lean restriction mechanism 8 comprises the left contact face 525a (an example of a first contact portion) and the right contact face 525b (an example of a first contact portion) that are provided on the second cross member 52, the left contact portion 53a (an example of a second contact portion) that is provided on the first side member 53 and the right contact portion 54a (an example of a second contact portion) that is provided on the second side member 54. The ranges where the first cross member 51 and the second cross member 52 are allowed to turn rightwards (the leaning of the body frame 21 to the left) are restricted by the contact of the left contact face 525a with the left contact portion 53a. The ranges where the first cross member 51 and the second cross member 52 are allowed to turn leftwards (the leaning of the body frame 21 to the right) are restricted by the contact of the right contact face 525b with the right contact portion 54a. When the body frame 21 is viewed from lateral sides thereof, the left contact face 525a comes into contact with the left contact portion 53a in a position that overlaps the first side member 53. When the body frame 21 is viewed from lateral sides thereof, the right contact face 525b comes into contact with the right contact portion 54a in a position that overlaps the second side member 54.

According to the configuration described heretofore, the lean restriction mechanism 8 is provided between a pair of the first cross member 51 and the second cross member 52 and a pair of the first side member 53 and the second side member 54 on which the cross members are turnably supported. The position where the left contact face 525a comes into contact with the left contact portion 53a lies in a lateral side of the first side member 53. The position where the right contact face 525b comes into contact with the right contact portion 54a lies in a lateral side of the second side member 54. The first cross member 51 and the second cross member 52 do not have to be brought into direct contact with each other, and therefore, the degree of freedom in shaping and positioning the first cross member 51 and the second cross member 52 is enhanced. Moreover, the position where the left contact face 525a comes into contact with the left contact portion 53a and the position where the right contact face 525b comes into contact with the right contact portion 54a lie in the lateral sides thereof of the first side member 53 and the second side member 54, and therefore, the interference of the turnable ranges of the first cross member 51 and the second cross member 52 with the lean restriction mechanism 8 is easily avoided. Consequently, even though the lean restriction mechanism 8 that regulates the ranges where the first cross member 51 and the second cross member 52 are allowed to turn relative to the body frame 21 is provided on the vehicle 1 comprising the leanable body frame 21 and the two front wheels 3, the degree of freedom in shaping and positioning the first cross member 51 and the second cross member 52 can be ensured, and the enlargement in size of the structure on the periphery of the steering shaft 60 that is disposed above the two front wheels 3 can be restricted.

In the vehicle 1 according to the embodiment, the second cross member 52 comprises the front plate-shaped member 522a, the left connecting block 523a and the right connecting block 523b. The front plate-shaped member 522a, which is an example of a base portion, is supported by the first side member 53, the second side member 54 and the body frame 21 (the head pipe 211). The left connecting block 523a and the right connecting block 523b, each of which is an example of an extended portion, are positioned behind the front plate-shaped member 522a when the body frame 21 is viewed from lateral sides thereof and overlap the first side member 53 and the second side member 54, respectively. The left contact face 525a is formed on the left connecting block 523a. The right contact face 525b is formed on the right connecting block 523b.

According to the configuration described the above, the position where the left contact face 525a comes into contact with the left contact portion 53a and the position where the right contact face 525b comes into contact with the right contact portion 54a lie in the lateral sides thereof of the first side member 53 and the second side member 54. The front plate-shaped member 522a of the second cross member 52 does not have to be brought into direct contact with the first cross member 51, and therefore, the degree of freedom in shaping and positioning the first cross member 51 and the front plate-shaped member 522a is enhanced. Moreover, the structure of the lean restriction mechanism 8 can be made small, and therefore, the interference of the ranges where the first cross member 51 and the front plate-shaped member 522a are allowed to turn with the lean restriction mechanism 8 is easily avoided. Consequently, even though the lean restriction mechanism 8 that regulates the ranges where the first cross member 51 and the second cross member 52 are allowed to turn relative to the body frame 21 is provided on the vehicle 1 comprising the leanable body frame 21 and the two front wheels 3, the degree of freedom in shaping and positioning the first cross member 51 and the second cross member 52 can be ensured, and the enlargement in size of the structure on the periphery of the steering shaft 60 that is disposed above the two front wheels 3 can be restricted.

The position where the left contact face 525a comes into contact with the left contact portion 53a and the position where the right contact face 525b comes into contact with the right contact portion 54a overlap the front plate-shaped member 522a of the second cross member 52 when the body frame 21 is viewed from front thereof.

According to this configuration, the position where the left contact face 525a comes into contact with the left contact portion 53a and the position where the right contact face 525b comes into contact with the right contact portion 54a overlap the first side member 53 and the second side member 54 when the body frame 21 is viewed from lateral sides thereof and overlap the front plate-shaped member 522a of the second cross member 52 when the body frame 21 is viewed from front thereof. The front plate-shaped member 522a of the second cross member 52 does not have to be brought into direct contact with the first cross member 51, and therefore, the degree of freedom in shaping and positioning the first cross member 51 and the front plate-shaped member 522a is enhanced. Moreover, it is possible to restrict the ranges where the first cross member 51 and the second cross member 52 are allowed to turn from being enlarged. Consequently, even though the lean restriction mechanism 8 that regulates the ranges where the first cross member 51 and the second cross member 52 are allowed to turn relative to the body frame 21 is provided on the vehicle 1 comprising the leanable body frame 21 and the two front wheels 3, the degree of freedom in shaping and positioning the first cross member 51 and the second cross member 52 can be ensured, and the enlargement in size of the structure on the periphery of the steering shaft 60 that is disposed above the two front wheels 3 can be restricted.

The second cross member 52 comprises the front plate-shaped member 522a and the rear plate-shaped member 522b. The rear plate-shaped member 522b, which is an example of a rear base portion, is provided behind the front plate-shaped member 522a, which is an example of a front base portion, in the front-rear direction of the body frame 21. The left connecting block 523a and the right connecting block 523b connect the front plate-shaped member 522a and the rear plate-shaped member 522b together.

According to this configuration, the left connecting block 523a and the right connecting block 523b serve to enhance the rigidity of the second cross member 52. The lean restriction mechanism 8 makes use of the portion having such a function. Accordingly, the structure of the lean restriction mechanism 8 can be made small, and therefore, the interference of the ranges where the first cross member 51 and the front plate-shaped member 522a are allowed to turn with the lean restriction mechanism 8 is easily avoided. Consequently, even though the lean restriction mechanism 8 that regulates the ranges where the first cross member 51 and the second cross member 52 are allowed to turn relative to the body frame 21 is provided on the vehicle 1 comprising the leanable body frame 21 and the two front wheels 3, the degree of freedom in shaping and positioning the first cross member 51 and the second cross member 52 can be ensured, and the enlargement in size of the structure on the periphery of the steering shaft 60 that is disposed above the two front wheels 3 can be restricted.

The position where the left contact face 525a comes into contact with the left contact portion 53a and the position where the right contact face 525b comes into contact with the right contact portion 54a overlap the front plate-shaped member 522a and the rear plate-shaped member 522b of the second cross member 52 when the body frame 21 is viewed from front thereof.

According to this configuration, the front plate-shaped member 522a of the second cross member 52 does not have to be brought into direct contact with the first cross member 51, and therefore, the degree of freedom in shaping and positioning the first cross member 51 and the front plate-shaped member 522a is enhanced. Moreover, it is possible to restrict the ranges where the first cross member 51 and the second cross member 52 are allowed to turn from being enlarged. Consequently, even though the lean restriction mechanism 8 that regulates the ranges where the first cross member 51 and the second cross member 52 are allowed to turn relative to the body frame 21 is provided on the vehicle 1 comprising the leanable body frame 21 and the two front wheels 3, the degree of freedom in shaping and positioning the first cross member 51 and the second cross member 52 can be ensured, and the enlargement in size of the structure on the periphery of the steering shaft 60 that is disposed above the two front wheels 3 can be restricted.

The left contact face 525a (an example of a first left contact portion) comes into contact with the left contact portion 53a (an example of a second left contact portion) as a result of the second cross member 52 turning counterclockwise relative to the body frame 21 when the body frame 21 viewed from front thereof. The right contact face 525b (an example of a first right contact portion) comes into contact with the right contact portion 54a (an example of a second right contact portion) as a result of the second cross member 52 turning clockwise relative to the body frame 21 when the body frame 21 viewed from front thereof.

When the first front wheel 31 or the second front wheel 32 receives a load from a road surface under a condition that the left contact face 525a is in contact with the left contact portion 53a or the right contact face 525b is in contact with the right contact portion 54a, the load is also transmitted to the left contact face 525a and the left contact portion 53a or the right contact face 525b and the right contact portion 54a. Moreover, in the vehicle comprising the leanable body frame 21 and the two front wheels 3, when the vehicle 1 turns by causing the body frame 21 to lean leftwards, the load that the first front wheel 31 bears becomes larger. Additionally, when the vehicle 1 turns by causing the body frame 21 to lean rightwards, a load that the second front wheel 32 bears becomes larger. The load that the first front wheel 31 bears is borne by the left contact portion 53a that is provided on the first side member 53 that lies near the first front wheel 31 and the left contact face 525a that is provided on the second cross member 52. The load that the second front wheel 32 bears is borne by the right contact portion 54a that is provided on the second side member 54 that lies near the second front wheel 32 and the right contact face 525b that is provided on the second cross member 52. This can reduce the load that the first cross member 51 bears. Consequently, even though the lean restriction mechanism 8 that regulates the ranges where the first cross member 51 and the second cross member 52 are allowed to turn relative to the body frame 21 is provided on the vehicle 1 comprising the leanable body frame 21 and the two front wheels 3, the degree of freedom in shaping and positioning the first cross member 51 and the second cross member 52 can be ensured, and the enlargement in size of the structure on the periphery of the steering shaft 60 that is disposed above the two front wheels 3 can be restricted.

The left contact face 525a that contacts the first side member 53 and the right contact face 525b that contacts the second side member 54 are provided on the second cross member 52.

When the first front wheel 31 or the second front wheel 32 receives a load from a road surface under a condition that the left contact face 525a is in contact with the left contact portion 53a or the right contact face 525b is in contact with the right contact portion 54a, the load is also transmitted to the left contact face 525a and the left contact portion 53a or the right contact face 525b and the right contact portion 54a. The left contact face 525a and the right contact face 525b are provided on the second cross member 52 that lies closer to the first front wheel 31 and the second front wheel 32 than the first cross member 51, and therefore, it is possible to reduce the load that the first cross member 51 bears. Consequently, even though the lean restriction mechanism 8 that regulates the ranges where the first cross member 51 and the second cross member 52 are allowed to turn relative to the body frame 21 is provided on the vehicle 1 comprising the leanable body frame 21 and the two front wheels 3, the degree of freedom in shaping and positioning the first cross member 51 and the second cross member 52 can be ensured, and the enlargement in size of the structure on the periphery of the steering shaft 60 that is disposed above the two front wheels 3 can be restricted.

As shown in Fig. 9, the left contact face 525a and the right contact face 525b include flat faces that are parallel to the turning axis of the second cross member 52 that extends in the front-rear direction of the body frame 21.

When the first front wheel 31 or the second front wheel 32 receives a load from a road surface under a condition that the left contact face 525a is in contact with the left contact portion 53a or the right contact face 525b is in contact with the right contact portion 54a, the load is also transmitted to the left contact face 525a and the left contact portion 53a or the right contact face 525b and the right contact portion 54a. According to the above configuration, it is possible to reliably receive the load even by simple structure. Consequently, even though the lean restriction mechanism 8 that regulates the ranges where the first cross member 51 and the second cross member 52 are allowed to turn relative to the body frame 21 is provided on the vehicle 1 comprising the leanable body frame 21 and the two front wheels 3, the degree of freedom in shaping and positioning the first cross member 51 and the second cross member 52 can be ensured, and the enlargement in size of the structure on the periphery of the steering shaft 60 that is disposed above the two front wheels 3 can be restricted.

The left contact face 525a and the right contact face 525b include the flat faces. The left contact portion 53a and the right contact portion 54a include the projecting portions that project towards the left contact face 525a and the right contact face 525b, respectively. The projecting portion provided on the left contact portion 53a can be brought into contact with the flat face provided on the left contact face 525a. The projecting portion provided on the right contact portion 54a can be brought into contact with the flat face provided on the right contact face 525b. The flat faces may be flat faces that include curved portions, as long as the flat faces can contact the corresponding projecting portions.

When the first front wheel 31 or the second front wheel 32 receives a load from a road surface under a condition that the left contact face 525a is in contact with the left contact portion 53a or the right contact face 525b is in contact with the right contact portion 54a, the load is also transmitted to the left contact face 525a and the left contact portion 53a or the right contact face 525b and the right contact portion 54a. According to the above configuration, it is possible to reliably receive the load even by simple structure. Consequently, even though the lean restriction mechanism 8 that regulates the ranges where the first cross member 51 and the second cross member 52 are allowed to turn relative to the body frame 21 is provided on the vehicle 1 comprising the leanable body frame 21 and the two front wheels 3, the degree of freedom in shaping and positioning the first cross member 51 and the second cross member 52 can be ensured, and the enlargement in size of the structure on the periphery of the steering shaft 60 that is disposed above the two front wheels 3 can be restricted.

The second cross member 52 that comprises the left contact face 525a and the first side member 53 that comprises the left contact portion 53a are two members that are connected together via a single bearing (the connecting portion G). Similarly, the second cross member 52 that comprises the right contact face 525b and the second side member 54 that comprises the right contact portion 54a are two members that are connected together via a single bearing (the connecting portion H). Consequently, dimensional errors in relation to the shapes of the constituent members or the assemblage of those members are made difficult to affect the abutment point between the left contact face 525a and the left contact portion 53a and the abutment point between the right contact face 525b and the right contact portion 54a. Consequently, the adjustment and management of the lean restriction angles of the body frame can be performed with accuracy.

### (Second Embodiment)

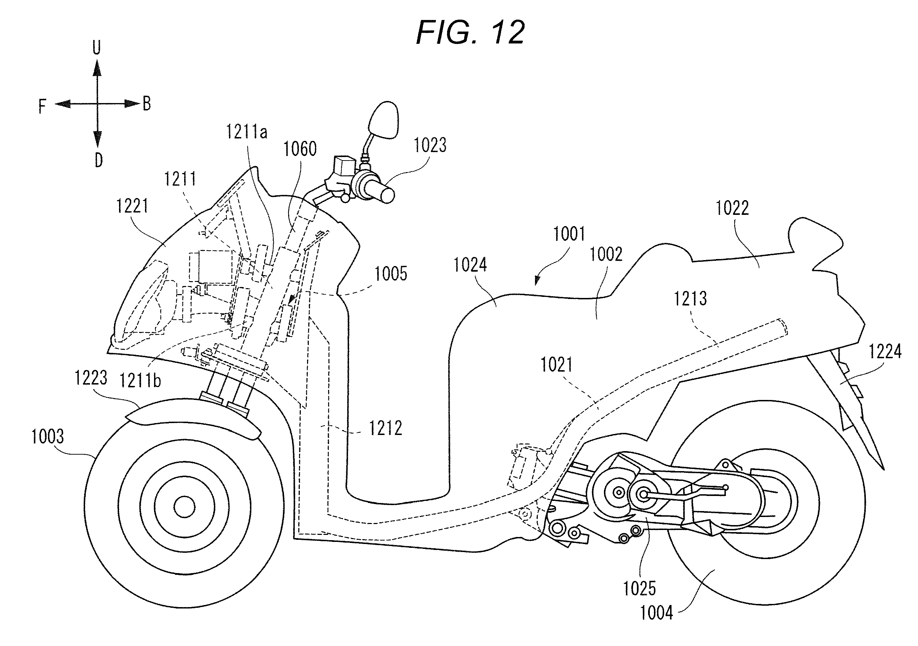

Referring to Figs. 12 to 16, a vehicle 1001 according to a second embodiment of the invention will be described.

The vehicle 1001 comprises a vehicle main body portion 1002, front wheels 1003 and a rear wheel 1004. The vehicle main body portion 1002 comprises a body frame 1021, a body cover 1022, a handlebar 1023, a seat 1024, and a power unit 1025.

The body frame 1021 supports the power unit 1025, the seat 1024 and the like. The power unit 1025 comprises a power source such as an engine or an electric motor, a transmission and the like. In Fig. 12, the body frame 1021 is shown by dashed lines.

The body frame 1021 comprises a head pipe 1211, a front frame 1212 and a rear frame 1213. The head pipe 1211 is disposed at a front portion of the vehicle 1001. A link mechanism 1005 is disposed on the periphery of the head pipe 1211.

A steering shaft 1060 is turnably inserted into the head pipe 1211. The steering shaft 1060 extends in an up-down direction. A first penetrating portion 1211 a and a second penetrating portion 1211b protrude from the head pipe 1211 frontwards so as to penetrate the link mechanism 1005.

The handlebar 1023 is mounted on an upper end of the steering shaft 1060. The front frame 1212 inclines obliquely downward from a front end thereof to the rear. The rear frame 1213 supports the seat 1024 and a tail lamp.

The vehicle body frame 1021 is covered by the body cover 1022. The body cover 1022 comprises a front cover 1221, front fenders 1223 and a rear fender 1224.

The front cover 1221 is positioned directly ahead of the sheet 1024. The front cover 1221 covers the head pipe 1211 and the link mechanism 1005.

The front fenders 1223 are disposed directly above the pair of left and right front wheels 1003. The front fenders 1223 are disposed directly below the front cover 1221. The rear fender 1224 is disposed directly above the rear wheel 1004.

The front wheels 1003 are disposed below the head pipe 1211 and the link mechanism 1005. The front wheels 1003 are disposed directly below the front cover 1221.

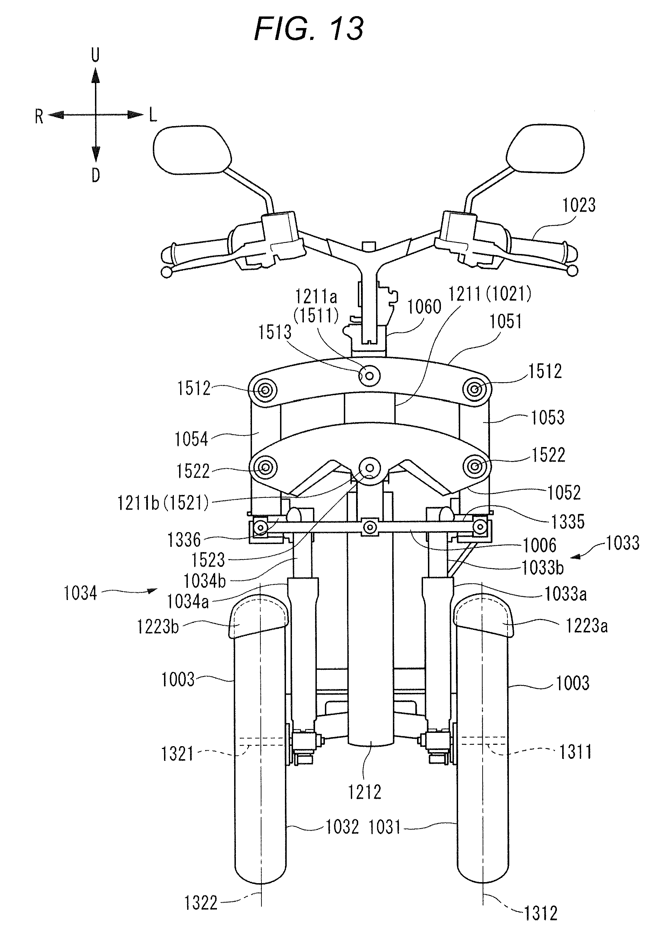

Fig. 13 is an overall front view showing the three-wheeled vehicle 1001 under a condition that the body cover 1022 is removed. The vehicle 1001 comprises the handlebar 1023, the steering shaft 1060, the head pipe 1211, the pair of left and front wheels 1003, and the link mechanism 1005. The link mechanism 1005 is disposed on the periphery of the head pipe 1211. The link mechanism 1005 is turnably attached to the head pipe 1211.

The front wheels 1003 include a first front wheel 1031 and a second front wheel 1032 that are arranged side by side in a left-right direction of the vehicle body frame 1021. The first front wheel 1031, which is an example of a left front wheel, is disposed on the left of a center in a width direction of the vehicle 1001. A first front fender 1223a, which is one of the front fenders 1223, is disposed directly above the first front wheel 1031. The second front wheel 1032, which is an example of a right front wheel, is disposed on the right of the center in the width direction of the vehicle 1001. A second front fender 1223b, which is the other of the front fenders 1223, is disposed directly above the second front wheel 1032. The first front wheel 1031 and the second front wheel 1032 are disposed symmetrically with respect to the center in the width direction of the vehicle 1001.

The first front wheel 1031 is connected to a first shock absorber 1033. The first front wheel 1031 is connected to a lower portion of the first shock absorber 1033. The first front wheel 1031 can rotate about a wheel spindle 1311. the wheel spindle 1311 extends in the width direction of the vehicle 1001. The first front wheel 1031 is turnable about a first center axis 1312. The first front wheel 1031 is turned about the first center axis 1312, whereby the vehicle 1001 changes its traveling direction.

The second front wheel 1032 is connected to a second shock absorber 1034. The second front wheel 1032 is connected to a lower portion of the second shock absorber 1034. The second front wheel 1032 can rotate about a wheel spindle 1321. The wheel spindle 1321 extends in the width direction. The second front wheel 1032 is turnable about a second center axis 1322. The second front wheel 1032 is turned about the second center axis 1322, whereby the vehicle 1001 changes its traveling direction.

The first shock absorber 1033, which is an example of a left shock absorbing device, supports the first front wheel 1031 at a lower portion thereof and buffers an upward displacement of the first front wheel 1031 in the up-down direction of the body frame 1021. Specifically, the first shock absorber 1033 includes a first lower portion 1033a and a first upper portion 1033b. The first front wheel 1031 is supported on the first lower portion 1033a. The first lower portion 1033a extends in the up-down direction and supports the first wheel spindle 1311 at a lower end thereof. The first wheel spindle 1311 supports the first front wheel 1031. The first upper portion 1033b is disposed directly above the first lower portion 1033a with part thereof inserted in the first lower portion 1033a. The first upper portion 1033b can move relative to the first lower portion 1033a in a direction in which the first lower portion 1033a extends. An upper portion of the first upper portion 1033b is fixed to a first bracket 1335.

The first shock absorber 1033 is a so-called telescopic shock absorber. The first lower portion 1033a and the first upper portion 1033b make up two telescopic elements that are aligned parallel in the front-rear direction to be connected together. Being so configured, the relative turning of the first upper portion 1033b to the first lower portion 1033a is restricted.

The second shock absorber 1034, which is an example of a right shock absorbing device, supports the second front wheel 1032 at the lower portion thereof and buffers the upward displacement of the second front wheel 1032 in the up-down direction of the body frame 1021. Specifically, the second shock absorber 1034 includes a second lower portion 1034a and a second upper portion 1034b. The second front wheel 1032 is supported by the second lower portion 1034a. The second lower portion 1034a extends in the up-down direction and supports the second wheel spindle 1321 at a lower end thereof. The second wheel spindle 1321 supports the second front wheel 1032. The second upper section 1034b is disposed directly above the second lower portion 1034a with part thereof inserted in the second lower portion 1034a. The second upper portion 1034b can move relative to the second lower portion 1034a in a direction in which the second lower portion 1034a extends. An upper portion of the second upper portion 1034b is fixed to a second bracket 1336.

The second shock absorber 1034 is a so-called telescopic shock absorber. The second lower portion 1034a and the second upper portion 1034b make up two telescopic elements that are aligned parallel in the front-rear direction to be connected together. Being so configured, the relative turning of the second upper portion 1034b to the second lower portion 1034a is restricted.

A tie rod 1006, which is an example of a turn transmission mechanism, transmits a turn of the steering shaft 1060 according to an operation of the handlebar 1023 to the first shock absorber 1033 and the second shock absorber 1034 to thereby cause the first shock absorber 1033 and the second shock absorber 1034 to turn the first center axis 1312 and the second center axis 1322, respectively.

The link mechanism 1005 is disposed below the handlebar 1023. The link mechanism 1005 is connected to the head pipe 1211 of the body frame 1021. The link mechanism 1005 comprises a upper cross member 1051, a lower cross member 1052, a first side rod 1053 (an example of a left side rod), and a second side rod 1054 (an example of a right side rod) that make up a configuration enabling the vehicle 1001 to lean as required.

Additionally, the link mechanism 1005 comprises the first bracket 1335 and the first shock absorber 1033 that are connected to a lower portion of the first side rod 1053 to make up a configuration that leans together with the first side rod 1053. Further, the link mechanism 1005 comprises the second bracket 1336 and the second shock absorber 1034 that are connected to a lower portion of the second side rod 1054 to make up a configuration that leans together with the second side rod 1054.

The upper cross member 1051 extends in a left-right direction of the body frame 1021. The upper cross portion 1051 is provided ahead of the head pipe 1211. An intermediate portion of the upper cross member 1051 is connected to the body frame 1021 (the head pipe 1211) by an intermediate connecting portion 1511. The intermediate portion of the upper cross member 1051 is supported on the body frame 1021 so that the intermediate portion is turnable about a turning axis (an example of an intermediate upper axis) that extends in the front-rear direction of the body frame 1021 at the intermediate connecting portion 1511. Even though the steering shaft 1060 turns as the handlebar 1023 turns, the upper cross member 1051 does not turn about a turning axis of the steering shaft 1060.

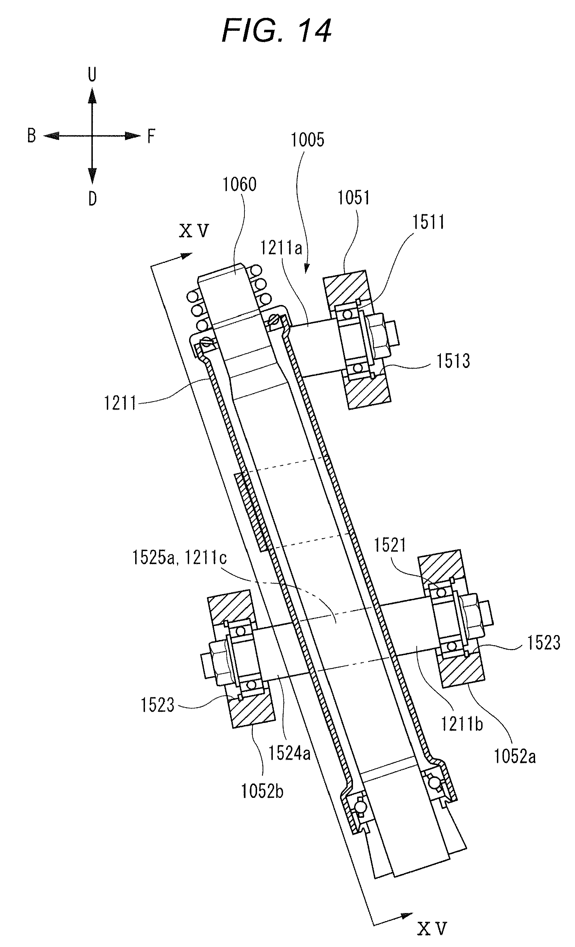

Specifically, as shown in Fig. 14, a first through hole 1513 is provided in the intermediate portion of the upper cross member 1051 and a first penetrating portion 1211 a that extends from the head pipe 1211 extends the first through hole 1513. This makes up the intermediate connecting portion 1511.

As shown in Fig. 13, a left end portion of the upper cross member 1051 is connected to an upper portion of the second side rod 1054 by a side connecting portion 1512. The upper portion of the second side rod 1054 is supported by the left end portion of the upper cross member 1051 so that the upper portion is turnable about a turning axis that extends in the front-rear direction of the body frame 1021 at the side connecting portion 1512. A right end portion of the upper cross member 1051 is connected to an upper portion of the first side rod 1053 at a side connecting portion 1512. The upper portion of the first side rod 1053 is supported by the right end portion of the upper cross member 1051 so that the upper portion is turnable about a turning axis that extends in the front-rear direction of the body frame 1021 at the side connecting portion 1512.

The lower cross member 1052 extends in the left-right direction of the body frame 1021. An intermediate portion of the lower cross member 1052 is connected to the body frame 1021 (the head pipe 1211) by an intermediate connecting portion 1521. The intermediate portion of the lower cross member 1052 is supported on the body frame 1021 so that the intermediate portion is turnable about a turning axis (an example of an intermediate lower axis) that extends in the front-rear direction of the body frame 1021 at the intermediate connecting portion 1521. The turning axis that extends in the front-rear direction of the body frame 1021 at the intermediate connecting portion 1521 is parallel to the turning axis that extends in the front-rear direction of the body frame 1021 at the intermediate connecting portion 1511. Even though the steering shaft 1060 turns as the handlebar 1023 turns, the lower cross member 1052 does not turn about the turning axis of the steering shaft 1060.

Specifically, as shown in Fig. 14, a second through hole 1523 is provided in the intermediate portion of the lower cross member 1052 and a second penetrating portion 1211b that extends from the head pipe 1211 extends through the second through hole 1523. This makes up the intermediate connecting portion 1521.

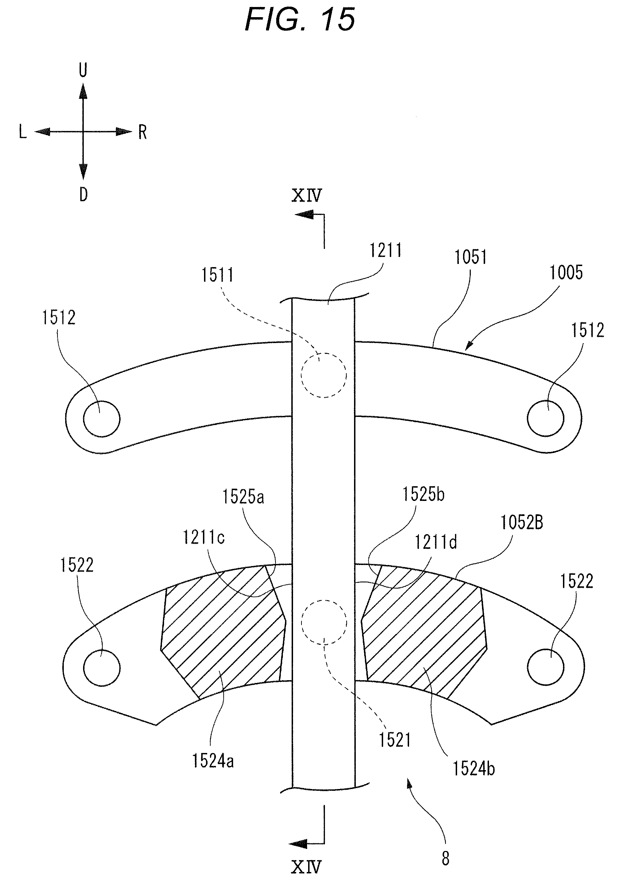

Fig. 15 is a sectional view taken along a line XV-XV in Fig. 14. Fig. 14 is a sectional view taken along a line XIV-XIV in Fig. 15. As is clear from these drawings, the lower cross member 1052 comprises a front plate-shaped member 1052a, a rear plate-shaped member 1052b, a left connecting block 1524a and a right connecting block 1524b. The front plate-shaped member 1052a and the rear plate-shaped member 1052b are connected together by the left connecting block 1524a and the right connecting block 1524b. The left connecting block 1524a is disposed on the left of the head pipe 1211. The right connecting block 1524b is disposed on the right of the head pipe 1211.

The left connecting block 1524a includes a left contact face 1525a. When the body frame 21 is in the upright state, at least a part of the left contact face 1525a faces rightwards and opposes to the head pipe 1211 with a space defined therebetween. The right connecting block 1524b includes a right contact face 1525b. When the body frame 21 is in the upright state, at least a part of the right contact face 1525b faces leftwards and opposes to the head pipe 1211 with a space defined therebetween.

As shown in Fig. 15, each of the left contact face 1525a and the right contact face 1525b includes a flat face that is parallel to a turning axis of the lower cross member 1052 that extends in the front-rear direction of the body frame 1021.

As shown in Fig. 13, a left end portion of the lower cross member 1052 is connected to a lower portion of the second side rod 1054 by a side connecting portion 1522. The lower portion of the second side rod 1054 is supported by the left end portion of the lower cross member 1052 so that the lower portion is turnable about a turning axis that extends in the front-rear direction of the body frame 1021 at the side connecting portion 1522. A right end portion of the lower cross member 1052 is connected to a lower portion of the first side rod 1053 by a side connecting portion 1522. The lower portion of the first side rod 1053 is supported by the right end portion of the lower cross member 1052 so that the lower portion is turnable about a turning axis that extends in the front-rear direction of the body frame 1021 at the side connecting portion 1522.

The first side rod 1053 is disposed directly on the left of the head pipe 1211 and extends parallel to the direction in which the head pipe 1211 extends. The first side rod 1053 is disposed above the first front wheel 1031 and the first shock absorber 1033. The first side rod 1053 comprises a turnable member (not shown) in an interior thereof. The turnable member is turnable about the first center axis 1312. A lower portion of the turnable member is connected to the first bracket 1335. Consequently, the first bracket 1335 is supported by the first side rod 1053 so that it is turnable about the first center axis 1312 (an example of a left axis).

The second side rod 1054 is disposed directly on the right of the head pipe 1211 and extends in the direction in which the head pipe 1211 extends. The second side rod 1054 is disposed above the second front wheel 1032 and the second shock absorber 1034. The second side rod 1054 comprises a turnable member (not shown) in an interior thereof. The turnable member is turnable about the second center axis 1322. A lower portion of the turnable member is connected to the second bracket 1336. Consequently, the second bracket 1336 is supported by the second side rod 1054 so that it is turnable about the second center axis 1322 (an example of a right axis).

In this way, the upper cross member 1051, the lower cross member 1052, the first side rod 1053 and the second side rod 1054 are connected together so that the upper cross member 1051 and the lower cross member 1052 maintain their postures that are parallel to each other and that the first side rod 1053 and the second side rod 1054 maintain their postures that are parallel to each other.

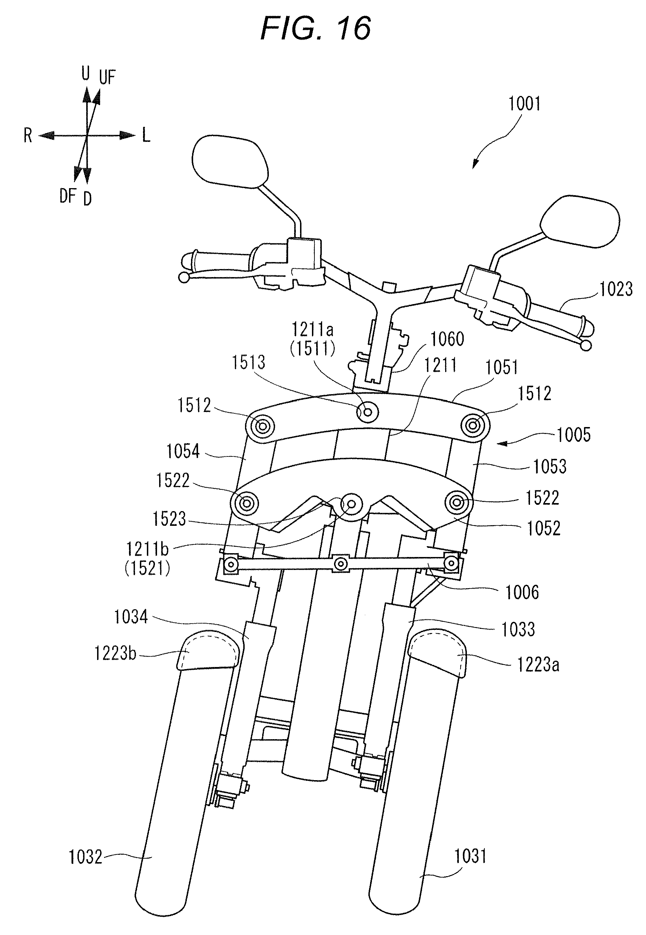

Fig. 16 is a front view of a front portion of the vehicle 1001 with the vehicle 1001 caused to lean, depicting how the vehicle 1001 leans. When the vehicle 1001 is in the upright state, an upward direction UF of the vehicle body frame 1021 coincides with a vertically upward direction U. When the vehicle 1001 is in a leaning state, the upward direction UF of the vehicle body frame 1021 does not coincide with the vertically upward direction U. This is true with a relationship between a vertically downward direction D and a downward direction DF of the body frame 1021.

As shown in Fig. 16, the vehicle 1001 leans leftwards or rightwards as the link mechanism 1005 works. The working of the link mechanism 1005 means that each of the constituent members in the link mechanism 1005 (the upper cross member 1051, the lower cross member 1052, the first side rod 1053 and the second side rod 1054) that serve to perform a leaning operation respectively turn relative to each other about their connecting points as the turning axes so that the link mechanism 1005 is transformed.

In the link mechanism 1005 of this embodiment, for example, when the vehicle 1001 is in the upright state, the upper cross member 1051, the lower cross member 1052, the first side rod 1053 and the second side rod 1054 that make up the link mechanism 1005 forms substantially a rectangular shape. However, when the vehicle 1001 is caused to lean, the substantial rectangular shape is changed into a parallelogram-like shape. The link mechanism 1005 performs a leaning operation as the upper cross member 1051, the lower cross member 1052, the first side rod 1053 and the second side rod 1054 turn relative to each other, whereby the first front wheel 1031 and the second front wheel 1032 are caused to lean individually.

For example, when a rider causes the vehicle 1001 to lean leftwards, the head pipe 1211 is leaned leftwards relative to the vertical direction. When the head pipe 1211 is leaned, the upper cross member 1051 is turned about the intermediate connecting portion 1511 relative to the head pipe 1211, and the lower cross member 1052 turns about the intermediate connecting portion 1521 relative to the head pipe 1211. Then, the upper cross member 1051 moves further leftwards than the lower cross member 1052, and the first side rod 1053 and the second side rod 1054 lean relative to the vertical direction while being kept parallel to the head pipe 1211. As this occurs, the first side rod 1053 and the second side rod 1054 turn relative to the upper cross member 1051 and the lower cross member 1052. As the link mechanism 1005 transforms as described the above, the first front wheel 1031 is displaced further upwards (to the upward direction UF) of the body frame 1021 than the second front wheel 1032, whereby the vehicle 1001 is permitted to lean leftwards.

As the head pipe 1211 leans leftwards, the head pipe 1211 approaches the left contact face 1525a shown in Fig. 15 that is formed on the left connecting block 1524a. When the head pipe 1211 leans further leftwards, the head pipe 1211 comes into contact with the left contact face 1525a. A portion on the head pipe 1211 with which the left contact face 1525a comes into contact is shown as a left contact portion 1211c.

This restricts a range where the lower cross member 1052 is allowed to turn rightwards about the intermediate connecting portion 1521 relative to the head pipe 1211. The lower cross member 1052 is connected to the upper cross member 1051 via the first side rod 1053 and the second side rod 1054, and therefore, a range where the upper cross member 1051 is allowed to turn rightwards about the intermediate connecting portion 1511 relative to the head pipe 1211 is also restricted.

On the contrary, when a rider causes the vehicle 1001 to lean rightwards, the head pipe 1211 is leaned rightwards relative to the vertical direction. When the head pipe 1211 is leaned, the upper cross member 1051 is turned about the intermediate connecting portion 1511 relative to the head pipe 1211, and the lower cross member 1052 is turned about the intermediate connecting portion 1521 relative to the head pipe 1211. Then, the upper cross member 1051 moves further rightwards than the lower cross member 1052, and the first side rod 1053 and the second side rod 1054 lean relative to the vertical direction while being kept parallel to the head pipe 1211. As this occurs, the first side rod 1053 and the second side rod 1054 turn relative to the upper cross member 1051 and the lower cross member 1052. As the link mechanism 1005 transforms as described the above, the second front wheel 1032 is displaced further upwards (to the upward direction UF) of the body frame 1021 than the first front wheel 1031, whereby the vehicle 1001 is permitted to lean rightwards.

As the head pipe 1211 leans leftwards, the head pipe 1211 approaches the right contact face 1525b shown in Fig. 15 that is formed on the right connecting block 1524b. When the head pipe 1211 leans further rightwards, the head pipe 1211 comes into contact with the right contact face 1525b. A portion on the head pipe 1211 with which the right contact face 1525b comes into contact is shown as a right contact portion 1211d.

This restricts a range where the lower cross member 1052 is allowed to turn leftwards about the intermediate connecting portion 1521 relative to the head pipe 1211. The lower cross member 1052 is connected to the upper cross member 1051 via the first side rod 1053 and the second side rod 1054, and therefore, a range where the upper cross member 1051 is allowed to turn leftwards about the intermediate connecting portion 1511 relative to the head pipe 1211 is also restricted.

Namely, the left contact face 1525a that is provided on the lower cross member 1052 and the left contact portion 1211c that is provided on the head pipe 1211, and the right contact face 1525b that is provided on the lower cross member 1052 and the right contact portion 1211 d that is provided on the head pipe 1211 make up a lean restriction mechanism 1008. The lean restriction mechanism 1008 restricts the ranges where the upper cross member 1051 and the lower cross member 1052 are allowed to turn relative to the head pipe 1211. This restricts a range where the body frame 1021 is allowed to lean leftwards or rightwards from its upright state.

As shown in Fig. 14, the left contact face 1525a that is provided on the lower cross member 1052 and the left contact portion 1211c that is provided on the head pipe 1211 contact each other in a position that overlaps the head pipe 1211 when the body frame 1021 is viewed from lateral sides thereof.

Although the illustration is omitted, the right contact face 1525b that is provided on the lower cross member 1052 and the right contact portion 1211 d that is provided on the head pipe 1211 contact each other in a position that overlaps the head pipe 1211 when the body frame 1021 is viewed from lateral sides thereof.

As has been described by reference to Figs. 14 and 15, the vehicle 1001 according to this embodiment comprises the lean restriction mechanism 1008 that restricts the ranges where the upper cross member 1051 and the lower cross member 1052 are allowed to turn relative to the body frame 1021. The lean restriction mechanism 1008 comprises the left contact face 1525a and the right contact face 1525b (an example of a first contact portion) that are provided on the lower cross member 1052 and the right contact portion 1211c (an example of a second contact portion) that is provided on the head pipe 1211 and the right contact portion 1211d (an example of a second contact portion) that is provided on the head pipe 1211. The contact of the left contact face 1525a with the left contact portion 1211c restricts the ranges where the upper cross member 1051 and the lower cross member 1052 are allowed turn rightwards (the leftward leaning towards the body frame 1021). The contact of the right contact face 1525b with the right contact portion 1211 d restricts the ranges where the upper cross member 1051 and the lower cross member 1052 are allowed turn leftwards (the rightward leaning towards the body frame 1021). The left contact face 1525a and the left contact portion 1211c contact each other in the position that overlaps the head pipe 1211 when the body frame 1021 is viewed from lateral sides thereof. The right contact face 1525b and the right contact portion 1211d contact each other in the position that overlaps the head pipe 1211 when the body frame 1021 is viewed from lateral sides thereof.

According to this configuration, the lean restriction mechanism 1008 is provided between the upper cross member 1051 and the lower cross member 1052 and the head pipe 1211 on which the upper cross member 1051 and the lower cross member 1052 are turnably supported. The position where the left contact face 1525a contacts the left contact portion 1211c and the position where the right contact face 1525b comes in contact with the right contact portion 1211d lie in lateral sides thereof of the head pipe 1211. The upper cross member 1051 and the lower cross member 1052 do not have to be brought into direct contact with each other, and therefore, the degree of freedom in shaping and positioning the upper cross member 1051 and the lower cross member 1052 is enhanced. Moreover, the position where the left contact face 1525a contacts the left contact portion 1211c and the position where the right contact face 1525b comes in contact with the right contact portion 1211 d lie in the lateral sides thereof of the head pipe 1211. Therefore, the interference of the ranges where the upper cross member 1051 and the lower cross member 1052 are allowed to turn with the lean restriction mechanism 1008 can easily be avoided. Consequently, even though the lean restriction mechanism 1008 that restricts the ranges where the upper cross member 1051 and the lower cross member 1052 are allowed to turn relative to the body frame 1021 is provided on the vehicle 1001 comprising the leanable body frame 1021 and the two front wheels 1003, the degree of freedom in shaping and positioning the upper cross member 1051 and the lower cross member 1052 can be ensured, and the enlargement in size of the structure on the periphery of the steering shaft 1060 that is disposed above the two front wheels 1003 can be restricted.

In the vehicle 1001 according to this embodiment, the lower cross member 1052 comprises the front plate-shaped member 1052a, the left connecting block 1524a and the right connecting block 1524b. The front plate-shaped portion 1052a, which is an example of a base portion, is supported by the first side rod 1053, the second side rod 1054 and the body frame 1021 (the head pipe 1211). The left connecting block 1524a and the right connecting block 1524b, each of which is an example of an extended portion, are positioned behind the front plate-shaped member 1052a and overlap the head pipe 1211 when the body frame 1021 is viewed from lateral sides thereof. The left contact face 1525a is formed on the left connecting block 1524a. The right contact face 1525b is formed on the right connecting block 1524b.

According to this configuration, the position where the left contact face 1525a contacts the left contact portion 1211c and the position where the right contact face 1525b comes in contact with the right contact portion 1211d lie in the lateral sides thereof of the head pipe 1211. The front plate-shaped member 1052a of the lower cross member 1052 does not have to be brought into direct contact with the upper cross member 1051, and therefore, the degree of freedom in shaping and disposing the upper cross member 1051 and the front plate-shaped member 1052a is enhanced. Moreover, the structure of the lean restriction mechanism 1008 can be made small, and therefore, the interference of the ranges where the upper cross member 1051 and the front plate-shaped member 1052a are allowed to turn with the lean restriction mechanism 1008 is easily avoided. Consequently, even though the lean restriction mechanism 1008 that restricts the ranges where the upper cross member 1051 and the lower cross member 1052 are allowed to turn relative to the body frame 1021 is provided on the vehicle 1001 comprising the leanable body frame 1021 and the two front wheels 1003, the degree of freedom in shaping and positioning the upper cross member 1051 and the lower cross member 1052 can be ensured more easily, and the enlargement in size of the structure on the periphery of the steering shaft 1060 that is disposed above the two front wheels 1003 can be restricted more easily.

The position where the left contact face 1525a contacts the left contact portion 1211c and the position where the right contact face 1525b contacts the right contact portion 1211 d overlap the front plate-shaped member 1052a of the lower cross member 1052 when the body frame 1021 is viewed from front thereof.

According to this configuration, the position where the left contact face 1525a contacts with the left contact portion 1211c and the position where the right contact face 1525b contacts the right contact portion 1211 d overlap the head pipe 1211 when the body frame 1021 is viewed from lateral sides thereof and overlap the front plate-shaped member 1052a of the lower cross member 1052 when the body frame 1021 is viewed from front thereof. The front plate-shaped member 1052a of the lower cross member 1052 does not have to be brought into direct contact with the upper cross member 1051, and therefore, the degree of freedom in shaping and disposing the upper cross member 1051 and the front plate-shaped member 1052a is enhanced. Moreover, it is possible to restrict the enlargement of the ranges where the upper cross member 1051 and the lower cross member 1052 are allowed to turn. Consequently, even though the lean restriction mechanism 1008 that restricts the ranges where the upper cross member 1051 and the lower cross member 1052 are allowed to turn relative to the body frame 1021 is provided on the vehicle 1001 comprising the leanable body frame 1021 and the two front wheels 1003, the degree of freedom in shaping and positioning the upper cross member 1051 and the lower cross member 1052 can be ensured more easily, and the enlargement in size of the structure on the periphery of the steering shaft 1060 that is disposed above the two front wheels 1003 can be restricted more easily.

The lower cross member 1052 comprises the front plate-shaped member 1052a and the rear plate-shaped member 1052b. The rear plate-shaped member 1052b, which is an example of a rear base portion, is provided behind the front plate-shaped member 1052a, which is an example of a front base portion, in the front-rear direction of the body frame 1021. The left connecting block 1524a and the right connecting block 1524b connect the front plate-shaped member 1052a and the rear plate-shaped member 1052b together.

According to this configuration, the left connecting block 1524a and the right connecting block 1524b serve to enhance the rigidity of the lower cross member 1052. The lean restriction mechanism 1008 makes use of the portion having such a function. Accordingly, the structure of the lean restriction mechanism 1008 can be made small, and therefore, the interference of the ranges where the upper cross member 1051 and the front plate-shaped member 1052a are allowed to turn with the lean restriction mechanism 1008 is easily avoided. Consequently, even though the lean restriction mechanism 1008 that restricts the ranges where the upper cross member 1051 and the lower cross member 1052 are allowed to turn relative to the body frame 1021 is provided on the vehicle 1001 comprising the leanable body frame 1021 and the two front wheels 1003, the degree of freedom in shaping and positioning the upper cross member 1051 and the lower cross member 1052 can be ensured more easily, and the enlargement in size of the structure on the periphery of the steering shaft 1060 that is disposed above the two front wheels 1003 can be restricted more easily.

The position where the left contact face 1525a contacts the left contact portion 1211c and the position where the right contact face 1525b contacts the right contact portion 1211 d overlap the front plate-shaped member 1052a and the rear plate-shaped portion 1052b of the lower cross member 1052 when the body frame 1021 is viewed from front thereof.

According to this configuration, the front plate-shaped member 1052a of the lower cross member 1052 does not have to be brought into direct contact with the upper cross member 1051, and therefore, the degree of freedom in shaping and disposing the upper cross member 1051 and the front plate-shaped member 1052a is enhanced. Moreover, it is possible to restrict the enlargement of the ranges where the upper cross member 1051 and the lower cross member 1052 are allowed to turn. Consequently, even though the lean restriction mechanism 1008 that restricts the ranges where the upper cross member 1051 and the lower cross member 1052 are allowed to turn relative to the body frame 1021 is provided on the vehicle 1001 comprising the leanable body frame 1021 and the two front wheels 1003, the degree of freedom in shaping and positioning the upper cross member 1051 and the lower cross member 1052 can be ensured more easily, and the enlargement in size of the structure on the periphery of the steering shaft 1060 that is disposed above the two front wheels 1003 can be restricted more easily.

The left contact face 1525a that contacts the head pipe 1211 and the right contact face 1525b that contacts the head pipe 1211 are provided on the lower cross member 1052.

When the first front wheel 1031 or the second front wheel 1032 receives a load from a road surface under a condition that the left contact face 1525a is in contact with the left contact portion 1211 c or the right contact face 1525b is in contact with the right contact portion 1211d, the load is also transmitted to the left contact face 1525a and the left contact portion 1211c or the right contact face 1525b and the right contact portion 1211d. According to this configuration, the left contact face 1525a and the right contact face 1525b are provided on the lower cross member 1052 that lies closer to the first front wheel 1031 and the second front wheel 1032 than the upper cross member 1051, and therefore, it is possible to reduce the load that the upper cross member 1051 bears. Consequently, even though the lean restriction mechanism 1008 that restricts the ranges where the upper cross member 1051 and the lower cross member 1052 are allowed to turn relative to the body frame 1021 is provided on the vehicle 1001 comprising the leanable body frame 1021 and the two front wheels 1003, the degree of freedom in shaping and positioning the upper cross member 1051 and the lower cross member 1052 can be ensured more easily, and the enlargement in size of the structure on the periphery of the steering shaft 1060 that is disposed above the two front wheels 1003 can be restricted more easily.

Each of the left contact face 1525a and the right contact face 1525b includes a flat face that is parallel to the turning axis of the lower cross member 1052 that extends in the front-rear direction of the body frame 1021 when the body frame 1021 is viewed from the up-down direction.

When the first front wheel 1031 or the second front wheel 1032 receives a load from a road surface under a condition that the left contact face 1525a is in contact with the left contact portion 1211 c or the right contact face 1525b is in contact with the right contact portion 1211d, the load is also transmitted to the left contact face 1525a and the left contact portion 1211 c or the right contact face 1525b and the right contact portion 1211d. According to the above configuration, it is possible to reliably receive the load even by simple structure. Consequently, even though the lean restriction mechanism 1008 that restricts the ranges where the upper cross member 1051 and the lower cross member 1052 are allowed to turn relative to the body frame 1021 is provided on the vehicle 1001 comprising the leanable body frame 1021 and the two front wheels 1003, the degree of freedom in shaping and positioning the upper cross member 1051 and the lower cross member 1052 can be ensured more easily, and the enlargement in size of the structure on the periphery of the steering shaft 1060 that is disposed above the two front wheels 1003 can be restricted more easily.

The lower cross member 1052 that comprises the left contact face 1525a and the head pipe 1211 that comprises the left contact portion 1221c are two members that are connected together via a single bearing (the intermediate connecting portion 1521). Similarly, the lower cross member 1052 that comprises the right contact face 1525b and the head pipe 1211 that comprises the right contact portion 1221 d are two members that are connected together via a single bearing (the intermediate connecting portion 1521). Consequently, dimensional errors in relation to the shapes of the constituent members or the assemblage of those members are made difficult to affect the abutment point between the left contact face 1525a and the left contact portion 1221c and the abutment point between the right contact face 1525b and the right contact portion 1221d. Consequently, the adjustment and management of the lean restriction angles of the body frame can be performed with accuracy.

In the embodiments that have been described heretofore, part of the lean restriction mechanism is provided on the second or lower cross member. However, in addition to or in place of this, a similar restriction mechanism may be provided on the first or upper cross member.

In the embodiments that have been described heretofore, the link mechanism comprises the first or upper cross member and the second or lower cross member. However, the invention is not limited thereto. The link mechanism may include three or more cross members. As this occurs, of a pair of arbitrary cross members that lie adjacently above or below, a cross member lying in an upper position is referred to as an upper cross member, and a cross member lying in a lower position is referred to as a lower cross member. Namely, a cross member may be provided in a position that lies upper than the upper cross member. Alternatively, a cross member may be provided in a position that lies lower than the lower cross member.

The upper cross member and the lower cross member are not required to be made up of a single member including a right end portion, an intermediate portion and a left end portion. For example, the upper cross member or the lower cross member may include a plurality of members that are arranged in the left-right direction of the body frame 21. For example, the upper cross member or the lower cross member may include a right cross member including a right end portion and an intermediate portion and a left cross member including a left end portion and an intermediate portion.

In the second cross member 52 according to the first embodiment, the front plate-shaped member 522a, the left connecting block 523a and the right connecting block 523b are monolithically formed and provided as a member individual from the rear plate-shaped member 522b. However, the front plate-shaped member 522a, the left connecting block 523a, the right connecting block 523b and the rear plate-shaped member 522b may be individual from each other or may all be formed as a monolithic member. The left contact face 525a and the right contact face 525b may be formed as part of the second cross member 52. Alternatively, the left contact face 525a and the right contact face 525b may be provided as individual members, which are then supported on the second cross member 52. What has been described the above is true with the lower cross member 1052 according to the second embodiment.

In the embodiments of the specification, the left contact face 525a and the right contact face 525b that are provided on the second cross member are described as being flat faces. However, the flat faces may be replaced by projecting portions. As this occurs, the left contact face 525a may be a left contact portion 525a, and the right contact face 525b may be a right contact portion 525b. Further, the left contact face 525a and the right contact face 525b are provided on the second cross member. However, these faces may be provided on the first cross member.

In this specification, the head pipe is a part of the body frame that supports the steering shaft, and there is imposed no limitation on the shape and types of constituent members thereof. The head pipe may be made up of a pipe material. The head pipe may be made up of a plurality of members so that they hold the steering shaft from left and right thereof. Additionally, the head pipe may be divided into upper and lower portions so that the steering shaft is supported thereby at a plurality of locations in the up-down direction.

In the embodiments described the above, the right side member or rod, the left side member or rod and the head pipe are provided in positions that overlap one on another when the body frame is viewed from lateral sides thereof. However, the head pipe may be provided in different positions in relation to the front-rear direction relative to the right side member or rod and the left side member or rod when the body frame is viewed from lateral sides thereof. Additionally, angles at which the right side member or rod and the left side member or rod are inclined relative to the up-down direction of the body frame may differ from an angle at which the head pipe is inclined.

The vehicle according to the invention is a vehicle comprising a leanable vehicle body frame and two front wheels. The number of rear wheels is not limited to one, and may be two. The body cover covering the vehicle body frame may be omitted. The driving power source may not be limited to the engine but may be an electric motor.

In this specification, the flat face provided on the contact portion is a mere one example. The flat face may be a curved face. The face formed on the contact portion which is shown as a preferred example according to the invention is not limited to the flat face but may be a face configured to come in contact with a projecting portion. According to the invention, the contact portion may not be provided with a face. A projecting portion may be provided on each of the first contact portion and the second contact portion.

The intermediate upper axis and the intermediate lower axis may be collectively referred to as an intermediate axis. The upper cross member and the lower cross member may be collectively referred to as a cross member. The left side rod and the right side rod may be collectively referred to as a side member.

## Claims

1. A vehicle, comprising:
a vehicle body frame (21,1021) including a head pipe (211,1211);
a right front wheel (32,1032) and a left front wheel (31,1031) arranged side by side in a left-right direction of the vehicle body frame (21,1021);
a right shock absorbing device (34,1034) supporting the right front wheel (32,1032) at a lower portion thereof, and configured to buffer displacement of the right front wheel (32,1032) relative to an upper portion thereof in an up-down direction of the vehicle body frame (21,1021);
a left shock absorbing device (33,1033) supporting the left front wheel (31,1031) at a lower portion thereof, and configured to buffer displacement of the left front wheel (31,1031) relative to an upper portion thereof in the up-down direction of the vehicle body frame (21,1021);
a link mechanism (5,1005) comprising:
a right side rod (54,1054) supporting the upper portion of the right shock absorbing device (34,1034) so as to be turnable about a right axis (Y2,1322) extending in the up-down direction of the vehicle body frame (21,1021);
a left side rod (53,1053) supporting the upper portion of the left shock absorbing device (33,1033) so as to be turnable about a left axis (Y1,1312) extending parallel to the right axis (Y2,1322);
an upper cross member (51,1051) having a right end portion turnably supporting an upper portion of the right side rod (54,1054), a left end portion turnably supporting an upper portion of the left side rod (53,1053), and an intermediate portion supported by the vehicle body frame (21,1021) so as to be turnable about an intermediate upper axis extending in a front-rear direction of the vehicle body frame (21,1021); and
a lower cross member (52,1052) having a right end portion turnably supporting a lower portion of the right side rod (54,1054), a left end portion turnably supporting a lower portion of the left side rod (53,1053), and an intermediate portion supported by the vehicle body frame (21,1021) so as to be turnable about an intermediate lower axis extending parallel to the intermediate upper axis;
a steering shaft (60,1060) supported by the head pipe (211,1211) at a position between the right side rod (54,1054) and the left side rod (53,1053) in the left-right direction of the vehicle body frame (21,1021), and having an upper end portion arranged above the intermediate upper axis in the up-down direction of the vehicle body frame (21,1021) and
turnable relative to the vehicle body frame (21,1021);
a handlebar (23,1023) disposed at the upper end portion of the steering shaft (60,1060);
a turn transmission mechanism (6,1006) configured to transmit turning of the steering shaft (60,1060) in accordance with an operation of the handlebar (23,1023) to the right shock absorbing device (34,1034) and the left shock absorbing device (33,1033); and
a lean restriction mechanism (8,1008) configured to restrict turnable ranges of the upper cross member (51,1051) and the lower cross member (52,1052) relative to the vehicle body frame (21,1021), and comprising:
a first contact portion (525a,525b,1525a,1525b) provided on one of the upper cross member (51,1051) and the lower cross member (52,1052),
**characterized by**
a second contact portion (53a,54a,1211c) provided on at least one of the right side rod (54,1054), the left side rod (53,1053), and the head pipe (211,1211),
wherein the lean restriction mechanism (8,1008) is configured to restrict the turnable ranges of the upper cross member (51,1051) and the lower cross member (52,1052) by means of the first contact portion (525a,525b,1525a,1525b) and the second contact portion (53a,54a,1211c) coming in contact with each other; and
wherein the lean restriction mechanism (8,1008) is configured to bring the first contact portion (525a,525b,1525a,1525b) and the second contact portion (53a,54a,1211c) in contact with each other at a position overlapping at least one of the right side rod (54,1054), the left side rod (53,1053), and the head pipe (211,1211) when the vehicle body frame (21,1021) is viewed from lateral sides thereof.

2. The vehicle as set forth in claim 1, **characterized in that** the one of the upper cross member (51,1051) and the lower cross member (52,1052) on which the first contact portion (525a,525b,1525a,1525b) is provided comprises:
a base portion (522a,1052a) supported by the right side rod (54,1054), the left side rod (53,1053), and the head pipe (211,1211); and
an extended portion (523a,523b,1524a,1524b) arranged behind or ahead of the base portion (522a,1052a) and overlapping at least one of the right side rod (54,1054), the left side rod (53,1053), and the head pipe (211,1211), when the vehicle body frame (21,1021) is viewed from the lateral sides thereof; and
wherein the first contact portion (525a,525b,1525a,1525b) is provided on the extended portion (523a,523b,1524a,1524b).

3. The vehicle as set forth in claim 2, **characterized in that** the lean restriction mechanism (8,1008) is configured to bring the first contact portion (525a,525b,1525a,1525b) and the second contact portion (53a,54a,1211 c) in contact with each other at a position overlapping the base portion (522a,1052a) of the one of the upper cross member (51,1051) and the lower cross member (52,1052) on which the first contact portion (525a,525b,1525a,1525b) is provided, when the vehicle body frame (21,1021) is viewed from front thereof.

4. The vehicle as set forth in claim 2 or 3, **characterized in that** the base portion of the one of the upper cross member (51,1051) and the lower cross member (52,1052) on which the first contact portion (525a,525b,1525a,1525b) is provided, includes:
a front base portion (522a,1052a); and
a rear base portion (522b,1052b) arranged behind the front base portion (522a,1052a) in the front-rear direction of the vehicle body frame (21,1021);
wherein the extended portion (523a,523b,1524a,1524b) of the one of the upper cross member (51,1051) and the lower cross member (52,1052) on which the first contact portion (525a,525b,1525a,1525b) is provided, connects the front base portion (522a,1052a) and the rear base portion (522b,1052b); and
wherein the first contact portion (525a,525b, 1525a, 1525b) is provided on the extended portion (523a,523b,1524a,1524b).

5. The vehicle as set forth in claim 4, **characterized in that** the lean restriction mechanism (8,1008) is configured to bring the first contact portion (525a,525b,1525a,1525b) and the second contact portion (53a,54a,1211c) in contact with each other at a position overlapping the front base portion (522a,1052a) and the rear base portion (522b,1052b) of the one of the upper cross member (51,1051) and the lower cross member (52,1052) on which the first contact portion (525a,525b,1525a,1525b) is provided, when the vehicle body frame (21,1021) is viewed from front thereof.

6. The vehicle as set forth in any one of claims 1 to 5, **characterized in that** the second contact portion (53a,54a) includes:
a second right contact portion (54a) provided on a left side face of the right side rod (54); and
a second left contact portion (53a) provided on a right side face of the left side rod (53);
wherein the first contact portion (525a,525b) includes:
a first right contact portion (525b) configured to come in contact with the second right contact portion (54a); and
a first left contact portion (525a) configured to come in contact with the second left contact portion (53a);
wherein the first left contact portion (525a) is configured to come in contact with the second left contact portion (53a) by counterclockwise turning of the one of the upper cross member (51) and the lower cross member (52) on which the first contact portion (525a,525b,1525a,1525b) is provided, relative to the vehicle body frame (21) when the vehicle body frame (21) is viewed from front thereof; and
wherein the first right contact portion (525b) is configured to come in contact with the second right contact portion (54a) by clockwise turning of the one of the upper cross member (51) and the lower cross member (52) on which the first contact portion (525a,525b,1525a, 1525b) is provided, relative to the vehicle body frame (21)
when the vehicle body frame (21) is viewed from front thereof.

7. The vehicle as set forth in any one of claims 1 to 6, **characterized in that** the first contact portion (525a,525b, 1525a, 1525b) is provided on the lower cross member (52,1052).

8. The vehicle as set forth in any one of claims 1 to 7, **characterized in that** at least one of the first contact portion (525a,525b,1525a,1525b) and the second contact portion (53a,54a,1211c) includes a face extending parallel to the intermediate upper axis and the intermediate lower axis.

9. The vehicle as set forth in any one of claims 1 to 8, **characterized in that** one of the first contact portion (525a,525b) and the second contact portion (53a,54a) includes a projecting portion projecting toward the other one of the first contact portion (525a,525b) and the second contact portion (53a,54a); and wherein the other one of the first contact portion (525a,525b) and the second contact portion (53a,54a) includes a contact face configured to come in contact with the projecting portion.

## Patentansprüche

1. Ein Fahrzeug, das umfasst:
einen Fahrzeug-Körper-Rahmen (21, 1021), der ein Kopfrohr (211, 1211) beinhaltet;
ein rechtes Vorderrad (32, 1032) und ein linkes Vorderrad (31, 1031), angeordnet Seite an Seite in einer Links-Rechts-Richtung des Fahrzeug-Körper-Rahmens (21, 1021);
eine rechte Stoßdämpfer-Vorrichtung (34, 1034), welche das rechte Vorderrad (32, 1032) an einem unteren Abschnitt derselben lagert, und konfiguriert ist, um eine Verlagerung des rechten Vorderrads (32, 1032) relativ zu einem oberen Abschnitt derselben in eine Oben-Unten-Richtung des Fahrzeug-Körper-Rahmens (21, 1021) zu puffern;
eine linke Stoßdämpfer-Vorrichtung (33, 1033), welche das linke Vorderrad (31, 1031) an einem unteren Abschnitt derselben lagert und konfiguriert ist, um eine Verlagerung des linken Vorderrads (31, 1031) relativ zu einem oberen Abschnitt desselben in derselben Oben-Unten-Richtung des Fahrzeug-Körper-Rahmens (21, 1021) zu puffern;
einen Gelenkmechanismus (5, 1005), der umfasst:
einen Rechts-Seiten-Stab (54, 1054), welcher den oberen Abschnitt der rechten Stoßdämpfer-Vorrichtung (34, 1034) lagert, so dass dieser drehbar um eine rechte Achse (Y2, 1322) ist, die sich in die Oben-Unten-Richtung des Fahrzeug-Körper-Rahmens (21, 1021) erstreckt;
einen Links-Seiten-Stab (53, 1053), welcher den oberen Abschnitt der linken Stoßdämpfer-Vorrichtung (33, 1033) lagert, so dass dieser drehbar um eine linke Achse (Y1, 1312) ist, die sich parallel zu der rechten Achse (Y2, 1322) erstreckt;
ein oberes Querelement (51, 1051), das einen rechten Endabschnitt hat, welcher einen oberen Abschnitt des Rechts-Seiten-Stabs (54,1054) drehbar lagert, einen linken Endabschnitt hat, welcher einen oberen Abschnitt des Links-Seiten-Stabs (53, 1053) drehbar lagert, und einen Zwischenabschnitt hat, gelagert durch den Fahrzeug-Körper-Rahmen (21, 1021), so dass dieses drehbar um eine Zwischen-Obere-Achse ist, die sich in eine Vorder-Rück-Richtung des Fahrzeug-Körper-Rahmens (21, 1021) erstreckt; und
ein unteres Querelement (52, 1052), das einen rechten Endabschnitt hat, welcher einen unteren Abschnitt des Rechts-Seiten-Stabs (54, 1054) drehbar lagert, einen linken Endabschnitt hat, welcher einen unteren Endabschnitt des Links-Seiten-Stabs (53, 1053) drehbar lagert, und einen Zwischenabschnitt, der durch den Fahrzeug-Körper-Rahmen (21, 1021) gelagert ist, so dass dieses drehbar um eine Zwischen-Untere-Achse ist, die sich parallel zu der Zwischen-Obere-Achse erstreckt;
eine Lenkwelle (60, 1060), gelagert durch das Kopfrohr (211, 1211) an einer Position zwischen dem Rechts-Seiten-Stab (54, 1054) und dem Links-Seiten-Stab (53, 1053) in der Links-Rechts-Richtung des Fahrzeug-Körper-Rahmens (21, 1021), und die einen oberen Endabschnitt hat, der oberhalb der Zwischen-Obere-Achse in der Oben-Unten-Richtung des Fahrzeug-Körper-Rahmens (21, 1021) angeordnet und
drehbar relativ zu dem Fahrzeug-Körper-Rahmen (21, 1021) ist;
eine Lenkstange (23, 1023), positioniert an dem oberen Endabschnitt der Lenkwelle (60, 1060);
einen Dreh-Übertragungs-Mechanismus (6, 1006), konfiguriert um eine Drehung der Lenkwelle (60, 1060) in Übereinstimmung mit einer Betätigung der Lenkstange (23, 1023) auf die rechte Stoßdämpfer-Vorrichtung (34, 1034) und die linke Stoßdämpfer-Vorrichtung (33, 1033) zu übertragen; und
einen Neigungs-Beschränkungs-Mechanismus (8, 1008), konfiguriert um Drehungsbereiche des oberen Querelements (51, 1051) und des unteren Querelements (52, 1052) relativ zu dem Fahrzeug-Körper-Rahmen (21, 1021) zu beschränken, und der umfasst:
einen ersten Kontaktabschnitt (525a, 525b, 1525a, 1525b), vorgesehen an einem von dem oberen Querelement (51, 1051) und dem unteren Querelement (52, 1052),
**gekennzeichnet durch**
einen zweiten Kontaktabschnitt (53a, 54a, 1211 c), vorgesehen an zumindest einem von dem Rechts-Seiten-Stab (54, 1054), dem Links-Seiten-Stab (53, 1053) und dem Kopfrohr (211, 1211), wobei der Neigungs-Beschränkungs-Mechanismus (8, 1008) konfiguriert ist, um die Drehungsbereiche des oberen Querelements (51, 1051) und des unteren Querelements (52, 1052) **durch** den ersten Kontaktabschnitt (525a, 525b, 1525a, 1525b) und den zweiten Kontaktabschnitt (53a, 54a, 1211 c), die in Kontakt miteinander kommen, zu beschränken; und
wobei der Neigungs-Beschränkungs-Mechanismus (8, 1008) konfiguriert ist, um den ersten Kontaktabschnitt (525a, 525b, 10525a, 1525b) und den zweiten Kontaktabschnitt (53a, 54a, 1211 c) an einer Position in Kontakt miteinander zu bringen, die zumindest mit einem von dem Rechts-Seiten-Stab (54, 1054), dem Links-Seiten-Stab (53, 1053) und dem Kopfrohr (211, 1211) überlappt, wenn der Fahrzeug-Körper-Rahmen (21, 1021) von Quer-Seiten desselben betrachtet ist.

2. Das Fahrzeug, wie angegeben in Anspruch 1, **dadurch gekennzeichnet, dass** das eines von dem oberen Querelement (51, 1051) und dem unteren Querelement (52, 1052), an welchem der erste Kontaktabschnitt (525a, 525b, 1525a, 1525b) vorgesehen ist, umfasst:
einen Basisabschnitt (522a, 1052a), der durch den Rechts-Seiten-Stab (54, 1054), den Links-Seiten-Stab (53, 1053) und das Kopfrohr (211, 1211) gelagert ist; und
einen verlängerten Abschnitt (523a, 523b, 1524a, 1524b), der hinter oder vor dem Basisabschnitt (522a, 1052a) und überlappend mit zumindest einem von dem Rechts-Seiten-Stab (54, 1054), dem Links-Seiten-Stab (53, 1053) und dem Kopfrohr (211, 1211), angeordnet ist, wenn der Fahrzeug-Körper-Rahmen (21, 1021) von den Quer-Seiten desselben betrachtet ist; und
wobei der erste Kontaktabschnitt (525a, 525b, 1525a, 1525b) an dem verlängerten Abschnitt (523a, 523b, 1524a, 1524b) vorgesehen ist.

3. Das Fahrzeug, wie angegeben in Anspruch 2, **dadurch gekennzeichnet, dass** der Neigungs-Beschränkungs-Mechanismus (8, 1008) konfiguriert ist, um den ersten Kontaktabschnitt (525a, 525b, 1525a, 1525b) und den zweiten Kontaktabschnitt (53a, 54a, 1211c) an einer Position in Kontakt miteinander zu bringen, welche den Basisabschnitt (522a, 1052a) von einem von dem oberen Querelement (51, 1051) und dem unteren Querelement (52, 1052), an dem der ersten Kontaktabschnitt (525a, 525b, 1525a, 1525b) vorgesehen ist, überlappt, wenn der Fahrzeug-Körper-Rahmen von vorne betrachtet ist.

4. Das Fahrzeug, wie angegeben in Anspruch 2 oder 3, **dadurch gekennzeichnet, dass** der Basisabschnitt des einen von dem oberen Querelement (51, 1051) und dem unteren Querelement (52, 1052), an dem der erste Kontaktabschnitt (525a, 525b, 1525a, 1525b) vorgesehen ist, beinhaltet:
einen vorderen Basisabschnitt (522a, 1052a); und
einen hinteren Basisabschnitt (522a, 1052b), der hinter dem vorderen Basisabschnitt (522a, 1052a) in der Vorder-Rück-Richtung des Fahrzeug-Körper-Rahmens (21, 1021) angeordnet ist;
wobei der verlängerte Abschnitt (523a, 523b, 1524a, 1524b) von einem von dem oberen Querelement (51, 1051) und dem unteren Querelement (52, 1052) an dem der erste Kontaktabschnitt (525a, 525b, 1525a, 1525b) vorgesehen ist, den vorderen Basisabschnitt (522a, 1052a) und dem hinteren Basisabschnitt (522b, 1052b) verbindet; und
wobei der erste Kontaktabschnitt (525a, 525b, 1525a, 1525b) an dem verlängerten Abschnitt (523a, 523b, 1524a, 1524b) vorgesehen ist.

5. Das Fahrzeug, wie angegeben in Anspruch 4, **dadurch gekennzeichnet, dass** der Neigungs-Beschränkungs-Mechanismus (8, 1008) konfiguriert ist, um den ersten Kontaktabschnitt (525a, 525b, 1525a, 1525b) und den zweiten Kontaktabschnitt (53a, 54a, 1211c) an einer Position in Kontakt miteinander zu bringen, welche den vorderen Basisabschnitt (522a, 1052a) und den hinteren Basisabschnitt (522b, 1052b) von dem einen von dem oberen Querelement (51, 1051) und dem unteren Querelement (52, 1052) an dem der erste Kontaktabschnitt (525a, 525b, 1525a, 1525b) vorgesehen ist, überlappt, wenn der Fahrzeug-Körper-Rahmen (21, 1021) von vorne betrachtet ist.

6. Das Fahrzeug, wie angegeben in irgendeinem der Ansprüche 1 bis 5, **dadurch gekennzeichnet, dass** der zweite Kontaktabschnitt (53a, 54a) beinhaltet:
einen zweiten rechten Kontaktabschnitt (54a), vorgesehen an einer linken Seitenfläche des Rechts-Seiten-Stabs (54); und
einen zweiten linken Kontaktabschnitt (53a), vorgesehen an einer rechten Seitenfläche des Links-Seiten-Stabs (53);
wobei der erste Kontaktabschnitt (525a, 525b) beinhaltet:
einen ersten rechten Kontaktabschnitt (525b) konfiguriert, um in Kontakt mit dem zweiten rechten Kontaktabschnitt (54a) zu kommen; und
einen ersten linken Kontaktabschnitt (525a) konfiguriert, um in Kontakt mit dem zweiten linken Kontaktabschnitt (53a) zu kommen;
wobei der erste linke Kontaktabschnitt (525a) konfiguriert ist, um in Kontakt mit dem zweiten linken Kontaktabschnitt (53a) durch Gegen-Uhrzeigersinn-Drehen des einen von dem oberen Querelement (51) und dem unteren Querelement (52), an dem der erste Kontaktabschnitt (525a, 525b, 1525a, 1525b) vorgesehen ist, relativ zu dem Fahrzeug-Körper-Rahmen (21), zu kommen, wenn der Fahrzeug-Körper-Rahmen (21) von vorne betrachtet ist; und
wobei der erste rechte Kontaktabschnitt (525b) konfiguriert ist, um in Kontakt mit dem zweiten rechten Kontaktabschnitt (54a) durch Uhrzeigersinn-Drehen des einen von dem oberen Querelement (51) und dem unteren Querelement (52), an dem der erste Kontaktabschnitt (525a, 525b, 1525a, 1525b) vorgesehen ist, relativ zu dem Fahrzeug-Körper-Rahmen (21), zu kommen, wenn der Fahrzeug-Körper-Rahmen (21) von vorne betrachtet ist.

7. Das Fahrzeug,wie angegeben in irgendeinem der Ansprüche 1 bis 6, **dadurch gekennzeichnet, dass** der erste Kontaktabschnitt (525a, 525b, 1525a, 1525b) an dem unteren Querelement (52, 1052) vorgesehen ist.

8. Das Fahrzeug, wie angegeben in irgendeinem der Ansprüche 1 bis 7, **dadurch gekennzeichnet, dass** zumindest einer von dem ersten Kontaktabschnitt (525a, 525b, 1525a, 1525b) und dem zweiten Kontaktabschnitt (53a, 54a, 1211 c) eine Fläche beinhaltet, die sich parallel zu der Zwischen-Obere-Achse und der Zwischen-Untere-Achse erstreckt.

9. Das Fahrzeug, wie angegeben in irgendeinem der Ansprüche 1 bis 8, **dadurch gekennzeichnet, dass** einer von dem ersten Kontaktabschnitt (525a, 525b) und dem zweiten Kontaktabschnitt (53a, 54a) einen vorspringenden Abschnitt beinhaltet, der zu dem anderen von dem ersten Kontaktabschnitt (525a, 525b) und dem zweiten Kontaktabschnitt (53a, 54a) vorspringt, und wobei der andere von dem ersten Kontaktabschnitt (525a, 525b) und dem zweiten Kontaktabschnitt (53a, 54a) eine Kontaktfläche beinhaltet, die konfiguriert ist, um in Kontakt mit dem vorspringenden Abschnitt zu kommen.

## Revendications

1. Véhicule comprenant :
un cadre de véhicule (21, 1021) incluant un tube de fourche (211, 1211),
une roue avant droite (32, 1032) et une roue avant gauche (31, 1031) agencées côte à côte dans la direction gauche - droite du cadre de véhicule (21, 1021),
un dispositif droit d'absorption des chocs (34, 1034) supportant la roue avant droite (32, 1032) à sa position inférieure et configuré pour amortir le déplacement de la roue avant droite (32, 1032) par rapport à sa partie supérieure dans la direction haut - bas du cadre de véhicule (21, 1021),
un dispositif gauche d'absorption des chocs (33, 1033) supportant la roue avant gauche (31, 1031) à sa position inférieure et configuré pour amortir le déplacement de la roue avant gauche (31, 1031) par rapport à sa partie supérieure dans la direction haut - bas du cadre de véhicule (21, 1021),
un mécanisme de liaison (5, 1005) comprenant :
une tige de côté droit (54, 1054) supportant la partie supérieure du dispositif droit d'absorption des chocs (34, 1034) de façon à pouvoir tourner autour d'un axe droit (Y2, 1322) s'étendant dans la direction haut - bas du cadre de véhicule (21, 1021)
une tige de côté gauche (53, 1053) supportant la partie supérieure du dispositif gauche d'absorption des chocs (33, 1033) de façon à pouvoir tourner autour d'un axe gauche (Y1, 1312) s'étendant parallèlement à l'axe droit (Y2, 1322),
un élément transversal supérieur (51, 1051) dont une partie d'extrémité droite supporte avec une possibilité de rotation la partie supérieure de la tige de côté droit (54, 1054), une partie d'extrémité gauche supporte avec une possibilité de rotation la partie supérieure de la tige de côté gauche (53, 1053) et une partie intermédiaire supportée par le cadre de véhicule (21, 1021) et qui peut tourner autour d'un axe supérieur intermédiaire s'étendant dans la direction avant - arrière du cadre de véhicule (21, 1021), et
un élément transversal inférieur (52, 1052) dont une partie d'extrémité droite supporte avec une possibilité de rotation la partie inférieure de la tige de côté droit (54, 1054), une partie d'extrémité gauche supporte avec une possibilité de rotation la partie inférieure de la tige de côté gauche (53, 1053) et une partie intermédiaire supportée par le cadre de véhicule (21, 1021) et qui peut tourner autour d'un axe inférieur intermédiaire s'étendant parallèlement à l'axe supérieur intermédiaire,
un axe de direction (60, 1060) supporté par le tube de fourche (211, 1211) à une position située entre la tige de côté droit (54, 1054) et la tige de côté gauche (53, 1053) dans la direction gauche - droite du cadre de véhicule (21, 1021), et comportant une partie d'extrémité supérieure agencée au-dessus de l'axe supérieur intermédiaire dans la direction haut - bas du cadre de véhicule (21, 1021) et pouvant tourner par rapport au cadre de véhicule (21, 1021),
un guidon (23, 1023 disposé au niveau de la partie d'extrémité supérieure de l'axe de direction (60, 1060), un mécanisme de transmission de braquage (6, 1006) configuré pour transmettre la rotation de ladite direction en fonction d'une opération sur le guidon (23, 1023) vers le dispositif droit d'absorption des chocs (34, 1034) et le dispositif gauche d'absorption des chocs (33, 1033), et un mécanisme de limitation de gîte (8, 1008) configuré pour limiter les plages de rotation de l'élément transversal supérieur (51, 1051) et de l'élément transversal inférieur (52, 1052) par rapport au cadre de véhicule (21, 1021), et comprenant :
une première partie de contact (525a, 525b, 1525a, 1525b) prévue sur l'un de l'élément transversal supérieur (51, 1051) et de l'élément transversal inférieur (52, 1052),
**caractérisé par**
une seconde partie de contact (53a, 54a, 1211c) prévue sur au moins l'un de la tige latérale droite (54, 1054), de la tige latérale gauche (53, 1053) et du tube de fourche (211, 1211), le mécanisme de restriction de gîte (8, 1008) étant configuré pour limiter les plages de rotation de l'élément transversal supérieur (51, 1051) et de l'élément transversal inférieur (52, 1052) au moyen de la première partie de contact (525a, 525b, 1525a, 1525b) et de la seconde partie de contact (53a, 54a, 1211c) venant en contact l'une avec l'autre, et
le mécanisme de restriction de gîte (8, 1008) étant configuré pour amener la première partie de contact (525a, 525b, 1525a, 1525b) et la seconde partie de contact (53a, 54a, 1211c) en contact l'une avec l'autre au niveau d'une position de chevauchement d'au moins l'un de la tige latérale droite (54, 1054), de la tige latérale gauche (53, 1053) et du tube de fourche (211, 1211) lorsque le cadre de véhicule (21, 1021) est visualisé depuis l'une de ses faces latérales.

2. Véhicule selon la revendication 1, **caractérisé en ce que** celui de l'élément transversal supérieur (51, 1051) et de l'élément transversal inférieur (52, 1052) sur lequel la première partie de contact (525a, 525b, 1525a, 1525b) est prévue comprend :
une partie formant base (522a, 1052a) supportée par la tige latérale droite (54, 1054), la tige latérale gauche (53, 1053) et le tube de fourche (211, 1211), et
une partie étendue (523a, 523b, 1524a, 1524b) agencée derrière ou devant la partie formant base (522a, 1052a) et chevauchant au moins l'un de la tige latérale droite (54, 1054), de la tige latérale gauche (53, 1053) et du tube de fourche (211, 1211) lorsque le cadre de véhicule (21, 1021) est visualisé depuis l'une de ses faces latérales, et
dans lequel la première partie de contact (525a, 525b, 1525a, 1525b) est prévue sur la partie étendue (523a, 523b, 1524a, 1524b).

3. Véhicule selon la revendication 2, **caractérisé en ce que** le mécanisme de restriction de gîte (8, 1008) est configuré pour amener la première partie de contact (525a, 525b, 1525a, 1525b) et la seconde partie de contact (53a, 54a, 1211c) à venir en contact l'une avec l'autre au niveau d'une position chevauchant la partie formant base (522a, 1052a) de l'un de l'élément transversal supérieur (51, 1051) et de l'élément transversal inférieur (52, 1052) sur lequel est prévue la première partie de contact (525a, 525b, 1525a, 1525b) lorsque le cadre de véhicule (21, 1021) est visualisé depuis sa face avant.

4. Véhicule selon la revendication 2 ou la revendication 3, **caractérisé en ce que** la partie formant base de l'un de l'élément transversal supérieur (51, 1051) et de l'élément transversal inférieur (52, 1052) sur laquelle est prévue la première partie de contact (525a, 525b, 1525a, 1525b) comprend :
une partie formant base avant (522a, 1052a), et
une partie formant base arrière (522b, 1052b) agencée derrière la partie formant base avant (522a, 1052a) dans la direction avant - arrière du cadre de véhicule (21, 1021),
dans lequel la partie étendue (523a, 523b, 1524a, 1524b) de l'un de l'élément transversal supérieur (51, 1051) et de l'élément transversal inférieur (52, 1052) sur laquelle est prévue la première partie de contact (525a, 525b, 1525a, 1525b), relie la partie formant base avant (522a, 1052a) et la partie formant base arrière (522b, 1052b), et
dans lequel la première partie de contact (525a, 525b, 1525a, 1525b) est prévue sur la partie étendue (523a, 523b, 1524a, 1524b).

5. Véhicule selon la revendication 4, **caractérisé en ce que** le mécanisme de restriction de gîte (8, 1008) est configuré pour mettre la première partie de contact (525a, 525b, 1525a, 1525b) et la seconde partie de contact (53a, 54a, 1211c) en contact l'une avec l'autre à une position chevauchant la partie formant base avant (522a, 1052a) et la partie formant base arrière (522b, 1052b) de l'un de l'élément transversal supérieur (51, 1051) et de l'élément transversal inférieur (52, 1052) sur lequel est prévue la première partie de contact (525a, 525b, 1525a, 1525b), lorsque le cadre de véhicule (21, 1021) est visualisé depuis sa face avant.

6. Véhicule selon l'une quelconque des revendications 1 à 5, **caractérisé en ce que** la seconde partie de contact (53a, 54a) inclut :
une seconde partie de contact droit (54a) prévue sur la face latérale gauche de la tige latérale droite (54), et
une seconde partie de contact gauche (53a) prévue sur la face latérale droite de la tige latérale gauche (53),
dans lequel la première partie de contact (525a, 525b) inclut :
une première partie de contact droit (525b) configurée pour venir en contact avec la seconde partie de contact droit (54a), et
une première partie de contact gauche (525a) configurée pour venir en contact avec la seconde partie de contact (53a),
dans lequel la première partie de contact gauche (525a) est configurée pour venir en contact avec la seconde partie de contact gauche (53a) par rotation dans le sens contraire des aiguilles d'une montre de l'un de l'élément transversal supérieur (51) et de l'élément transversal inférieur (52) sur lequel est prévue la première partie de contact (525a, 525b, 1525a, 1525b) par rapport au cadre de véhicule (21) lorsque le cadre de véhicule (21) est visualisé depuis sa face avant, et
dans lequel la première partie de contact droit (525b) est configurée pour venir en contact avec la seconde partie de contact droit (54a) par rotation dans le sens des aiguilles d'une montre de l'un de l'élément transversal supérieur (51) et de l'élément transversal inférieur (52) sur lequel est prévue la première partie de contact (525a, 525b, 1525a, 1525b) par rapport au cadre de véhicule (21) lorsque le cadre de véhicule (21) est visualisé depuis sa face avant.

7. Véhicule selon l'une quelconque des revendications 1 à 6, **caractérisé en ce que** la première partie de contact (525a, 525b, 1525a, 1525b) est prévue sur l'élément transversal inférieur (52, 1052).

8. Véhicule selon l'une quelconque des revendications 1 à 7, **caractérisé en ce qu'**au moins l'une de la première partie de contact (525a, 525b, 1525a, 1525b) et de la seconde partie de contact (53a, 54a, 1211c) inclut une face s'étendant parallèlement à l'axe supérieur intermédiaire et l'axe inférieur intermédiaire.

9. Véhicule selon l'une quelconque des revendications 1 à 8, **caractérisé en ce que** l'une de la première partie de contact (525a, 525b) et de la seconde partie de contact (53a, 54a) inclut une partie en saillie dépassant vers l'autre de la première partie de contact (525a, 525b) et de la seconde partie de contact (53a, 54a),
dans lequel l'autre de la première partie de contact (525a, 525b) et de la seconde partie de contact (53a, 54a) inclut une face de contact configurée pour venir en contact avec la partie en saillie.
